# EUROPEAN PATENT SPECIFICATION

(11) **EP 4 454 603 B1**
(45) Date of publication and mention of the grant of the patent: **15.07.2026**
(21) Application number: 22910876.6
(22) Date of filing: 06.12.2022
(51) Int. Cl.: A61C 17/02, H01M 50/244, H01M 50/247, A61C 17/22

(54) **ORAL CLEANSING DEVICE**
MUNDREINIGUNGSVORRICHTUNG
DISPOSITIF DE NETTOYAGE BUCCAL

(30) Priority: 24.12.2021 JP 2021211245
(43) Date of publication of application: 30.10.2024
(73) Proprietor: Panasonic Intellectual Property Management Co., Ltd., Kadoma-shi, Osaka 571-0057 (JP)
(72) Inventor: NAKASAKI, Shintaro, Kadoma-shi Osaka 571-0057 (JP)
(74) Representative: Grünecker Patent- und Rechtsanwälte PartG mbB
(86) International application number: PCT/JP2022/044891
(87) International publication number: WO 2023/120162

(56) References cited:
- WO-A1-2013/057900
- GB-A- 2 317 555
- JP-A- 2003 031 194
- JP-A- 2003 031 194
- JP-A- 2007 329 005
- JP-A- 2011 200 424
- JP-A- 2012 216 332
- JP-A- H10 275 611
- JP-A- H11 250 883
- JP-U- H0 487 162
- JP-U- S5 859 168
- US-A- 5 590 434

## Description

### TECHNICAL FIELD

The present disclosure relates to an oral cleansing device.

### BACKGROUND ART

As disclosed in PTL 1, an oral cleansing device driven by a battery built in a device body has been conventionally known.

GB 2 317 555 A also discloses a battery operated electrical toothbrush. At the bottom thereof, it has an end cap provided with a terminal that presses against a positive pole of the battery. A negative pole of the battery is electrically connected to the one end of the rotor via a conductive spring and a bearing.

### Citation List

### Patent Literature

PTL 1: Unexamined Japanese Patent Publication No. 2011-200424

### SUMMARY OF THE INVENTION

### Technical problem

Such an oral cleansing device preferably includes a battery housing that houses and holds a battery and that can be downsized.

It is thus an object of the present disclosure to provide an oral cleansing device including a battery housing that can be downsized.

### Solution to problem

The object of the invention is defined in claim 1.

An oral cleansing device according to an aspect of the present disclosure is driven by a battery and includes a battery housing capable of housing the battery. The battery housing includes a body having a housing space in which the battery is housed, and a battery cover that closes an opening of the housing space. The battery cover includes only a positive electrode terminal out of a negative electrode terminal electrically connected to a negative electrode of the battery and the positive electrode terminal electrically connected to a positive electrode of the battery. The body includes the negative electrode terminal electrically connected to the positive electrode terminal of the battery cover via the battery.

The present disclosure enables providing an oral cleansing device including a battery housing that can be downsized.

### BRIEF DESCRIPTION OF THE DRAWINGS

Fig. 1 is a diagram schematically illustrating an oral cleansing device according to the present exemplary embodiment.
Fig. 2 is a side view illustrating a state where a device body of the oral cleansing device according to the present exemplary embodiment is housed in a tank.
Fig. 3 is a side view illustrating the oral cleansing device according to the present exemplary embodiment in a state where engagement of the oral cleansing device in a housed state is released.
Fig. 4 is a side view illustrating a state where a device body of the oral cleansing device according to the present exemplary embodiment is pulled out from a tank.
Fig. 5 is a sectional view of the oral cleansing device according to the present exemplary embodiment, the sectional view illustrating a state where a device body of the oral cleansing device is housed in a tank while a part of the oral cleansing device is not illustrated.
Fig. 6 is a sectional view of the oral cleansing device according to the present exemplary embodiment, the sectional view illustrating a state where a device body of the oral cleansing device is pulled out from a tank while a part of the oral cleansing device is not illustrated.
Fig. 7 is a perspective view illustrating a tank of the oral cleansing device according to the present exemplary embodiment.
Fig. 8 is a perspective view of a device body of the oral cleansing device according to the present exemplary embodiment as viewed from above in one direction.
Fig. 9 is a perspective view of a device body of the oral cleansing device according to the present exemplary embodiment as viewed from above in another direction.
Fig. 10 is a perspective view of a device body of the oral cleansing device according to the present exemplary embodiment as viewed from below.
Fig. 11 is a diagram illustrating a back surface of a device body of the oral cleansing device according to the present exemplary embodiment.
Fig. 12 is a side view illustrating a device body of the oral cleansing device according to the present exemplary embodiment, and illustrating a lower end of the device body inverted in an enlarged manner.
Fig. 13 is a diagram illustrating a device body of the oral cleansing device according to the present exemplary embodiment, and is a perspective view of the device body with a battery cover in an open state as viewed from below.
Fig. 14 is a diagram illustrating a device body of the oral cleansing device according to the present exemplary embodiment, and is a diagram illustrating a back surface of the device body with a battery cover in an open state.
Fig. 15 is a side view illustrating a device body of the oral cleansing device according to the present exemplary embodiment, and illustrating a lower end of the device body in an enlarged manner in a state where the device body with a battery cover in an open state is inverted.
Fig. 16 is a perspective view illustrating a device body of the oral cleansing device according to the present exemplary embodiment, and illustrating a lower end of the device body in an enlarged manner in a state where the device body in which a battery cover is removed is inverted.
Fig. 17 is a perspective view of a battery cover of the oral cleansing device according to the present exemplary embodiment as viewed from inside.
Fig. 18 is a perspective view of a battery cover of the oral cleansing device according to the present exemplary embodiment as viewed from outside.
Fig. 19 is a plan view illustrating a battery cover of the oral cleansing device according to the present exemplary embodiment.
Fig. 20 is a diagram illustrating a back surface of a battery cover of the oral cleansing device according to the present exemplary embodiment.
Fig. 21 is a side view illustrating a battery cover of the oral cleansing device according to the present exemplary embodiment.
Fig. 22 is a side view illustrating a cover body of the oral cleansing device according to the present exemplary embodiment.
Fig. 23 is a side view illustrating a battery base of the oral cleansing device according to the present exemplary embodiment.
Fig. 24 is a plan view illustrating a battery base of the oral cleansing device according to the present exemplary embodiment.
Fig. 25 is an enlarged perspective view illustrating a back side of a battery base of the oral cleansing device according to the present exemplary embodiment.
Fig. 26 is a side view illustrating a leaf spring of the oral cleansing device according to the present exemplary embodiment.
Fig. 27 is a diagram illustrating a battery housing of the oral cleansing device according to the present exemplary embodiment, and is a partially enlarged sectional view illustrating a state where a battery is inserted in a normal position and a battery cover is attached.
Fig. 28 is a diagram illustrating a battery housing of the oral cleansing device according to the present exemplary embodiment, and is a partially enlarged sectional view illustrating a state where a battery is inserted in a reverse position and a battery cover is attached.
Fig. 29 is a diagram illustrating a battery housing of the oral cleansing device according to the present exemplary embodiment, and is a partially enlarged sectional view illustrating a state where a battery and a battery cover are removed.
Fig. 30 is a diagram schematically illustrating an example of an engagement groove formed in a battery housing of the oral cleansing device according to the present exemplary embodiment.
Fig. 31 is a diagram schematically illustrating a first modification of an engagement groove formed in a battery housing of the oral cleansing device according to the present exemplary embodiment.
Fig. 32 is a diagram schematically illustrating a second modification of an engagement groove formed in a battery housing of the oral cleansing device according to the present exemplary embodiment.
Fig. 33 is a diagram schematically illustrating a third modification of an engagement groove formed in a battery housing of the oral cleansing device according to the present exemplary embodiment.
Fig. 34 is a diagram illustrating a device body of the oral cleansing device according to the present exemplary embodiment, and is a diagram illustrating a back surface of the device body in a state where the battery cover is in a half-open state without protruding from a large-diameter part of the device body.
Fig. 35 is a diagram illustrating a device body of the oral cleansing device according to the present exemplary embodiment, and is a diagram illustrating a back surface of the device body in a state where the battery cover is in a half-open state and protrudes from a large-diameter part of the device body.
Fig. 36 is a side view illustrating an oral cleansing device according to a modification.

### DESCRIPTION OF EMBODIMENT

Hereinafter, an exemplary embodiment will be described in detail with reference to the drawings. However, detailed description more than necessary may not be described. For example, detailed description of already well-known matters and duplicated description of substantially identical elements may not be described.

The accompanying drawings and the following description are only presented to help those skilled in the art fully understand the present disclosure and are not intended to limit the subject matters described in the scope of claims.

The exemplary embodiment below will be described with a vertical direction defined such that a nozzle is positioned above when an oral cleansing device is disposed.

### (Exemplary embodiment)

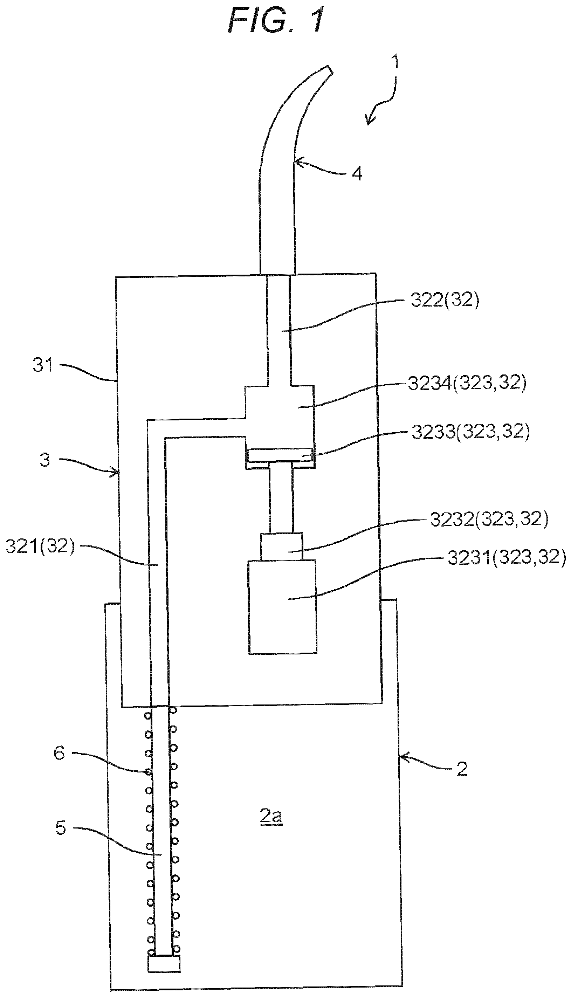

Fig. 1 is a diagram schematically illustrating oral cleansing device 1 according to the present exemplary embodiment. As illustrated in Fig. 1, oral cleansing device 1 according to the present exemplary embodiment includes tank 2, device body 3, and nozzle 4.

Tank 2 is formed in a bottomed tubular shape that is open upward and has a lower end closed, and reservoir 2a capable of storing liquid is formed inside tank 2. Although water is available as the liquid stored in reservoir 2a, the liquid is not limited to water, and various liquids are available. For example, a washing liquid in which a cleaning agent is mixed in water is available.

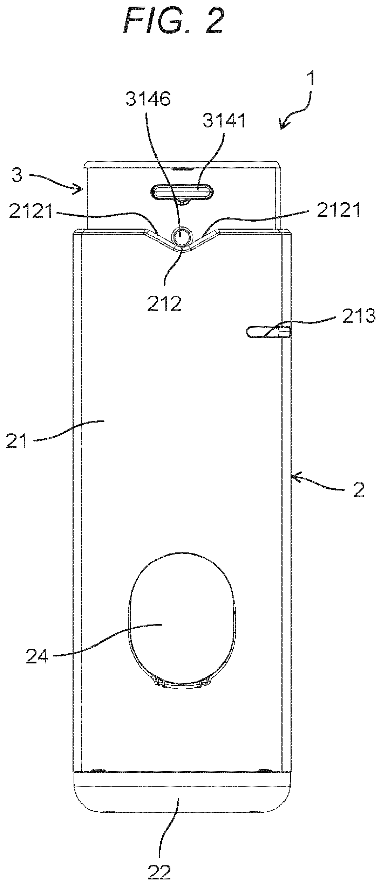

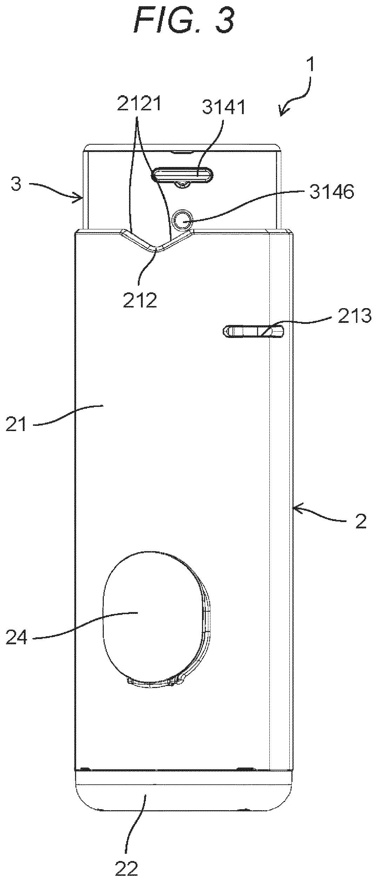

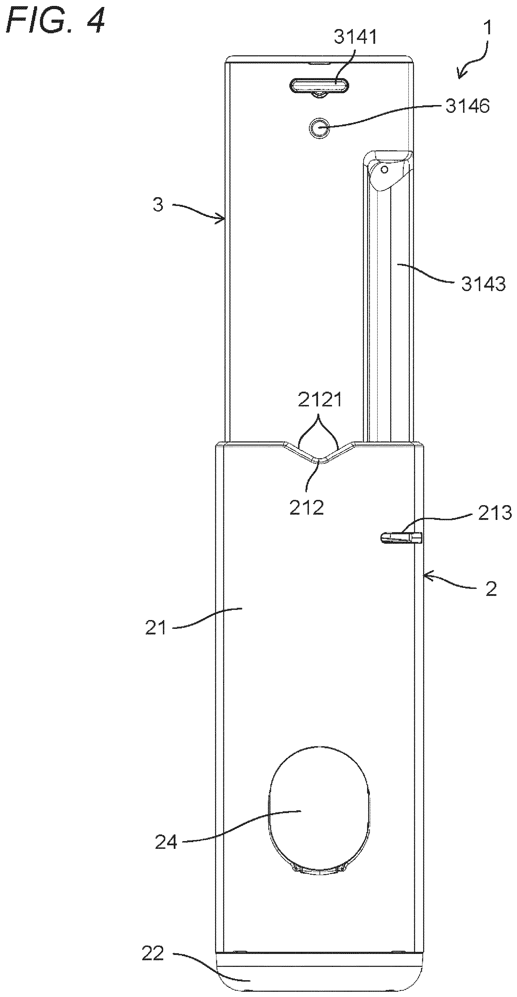

Fig. 2 is a side view illustrating a state where device body 3 of oral cleansing device 1 according to the present exemplary embodiment is housed in tank 2. Fig. 3 is a side view illustrating oral cleansing device 1 according to the present exemplary embodiment in a state where engagement of the oral cleansing device in a housed state is released. Fig. 4 is a side view illustrating a state where device body 3 of oral cleansing device 1 according to the present exemplary embodiment is pulled out from tank 2. As illustrated in Figs. 2 to 4, device body 3 is supported in tank 2 in a slidable manner in a vertical direction (i.e., a longitudinal direction of device body 3) in the present exemplary embodiment. At this time, device body 3 is supported in tank 2 in a slidable manner in a state of having at least a lower end disposed in reservoir 2a.

Then, sliding device body 3 downward in tank 2 to store device body 3 in tank 2 as illustrated in Fig. 2 enables oral cleansing device 1 to be housed in a more compact state when oral cleansing device 1 is not used. Alternatively, sliding device body 3 upward in tank 2 to pull out device body 3 to above tank 2 as illustrated in Fig. 4 enables more liquids to be supplied to reservoir 2a of tank 2. Then, nozzle 4 is attached to device body 3 in a state where device body 3 is pulled out to above tank 2, and a liquid is supplied to reservoir 2a of tank 2, and thus enabling oral cleansing device 1 to be used.

As described above, oral cleansing device 1 according to the present exemplary embodiment is an oral cleansing device with a telescopic tank, the oral cleansing device including device body 3 supported by tank 2 in a slidable manner between a housed state in which device body 3 is housed in tank 2 and a pulled-out state in which device body 3 is pulled out from tank 2. That is, when oral cleansing device 1 is not in use, device body 3 can be housed in tank 2 by being pushed into tank 2 after nozzle 4 is removed from device body 3. Then, oral cleansing device 1 can be used by pulling out device body 3 from tank 2 and attaching nozzle 4 to device body 3.

Device body 3 is detachably supported by tank 2 in the present exemplary embodiment, so that device body 3 can be removed from tank 2 by pulling device body 3 upward. Then, pressing device body 3 downward in a state where a lower end part of device body 3 is inserted into tank 2 enables device body 3 to be attached to tank 2.

Tank 2 is made of a polypropylene resin or the like to be able to be cleaned by a dishwasher, and is formed in the shape of a transparent or translucent container to improve design properties. Tank 2 is also formed with a horizontal cross-sectional shape of a perfect circle so that device body 3 can be relatively rotated.

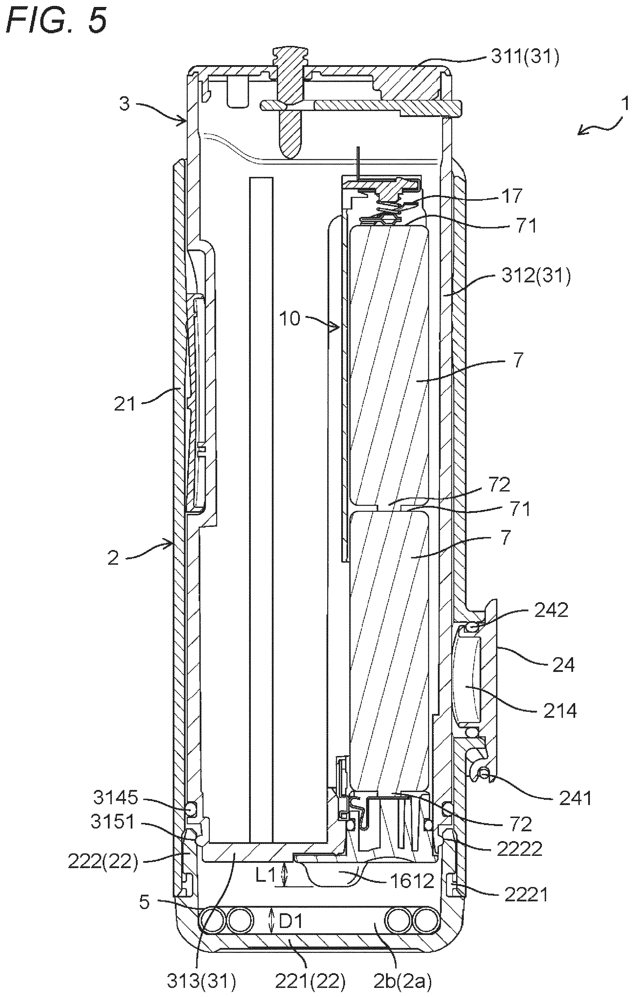

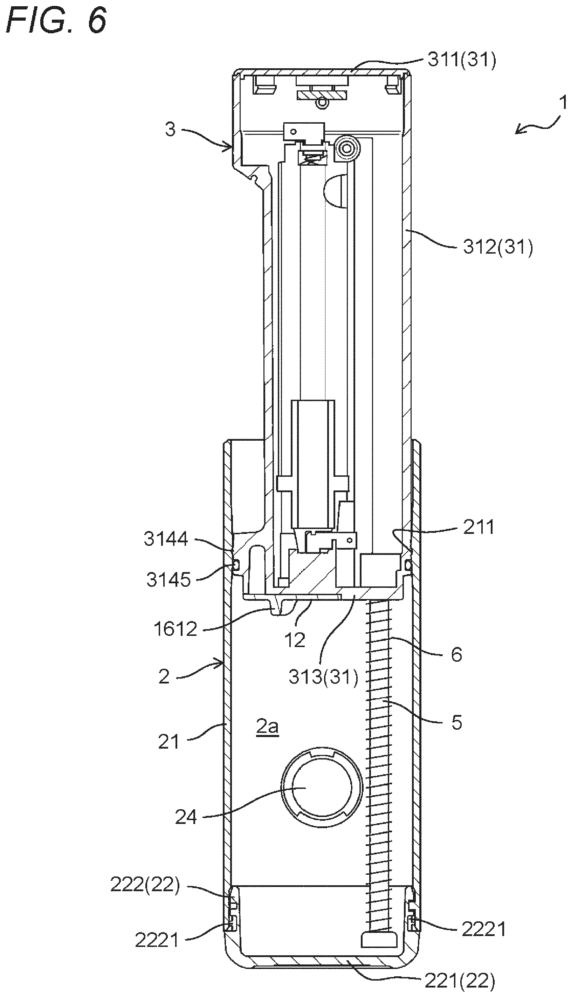

Fig. 5 is a sectional view illustrating a state where device body 3 of oral cleansing device 1 according to the present exemplary embodiment is housed in tank 2 while a part of oral cleansing device 1 is not illustrated. Fig. 6 is a sectional view illustrating a state where device body 3 of oral cleansing device 1 according to the present exemplary embodiment is pulled out from tank 2 while a part of oral cleansing device 1 is not illustrated. As illustrated in Figs. 5 and 6, tank 2 in the present embodiment includes tubular body 21 in a substantially cylindrical shape that is open vertically, and bottom wall 22 that is detachably attached to tubular body 21 with a closed lower opening. When bottom wall 22 of tank 2 is configured to be detachable from tubular body 21 as described above, a liquid in reservoir 2a can be discharged without detaching device body 3 from tank 2.

Bottom wall 22 includes bottom wall body 221 in a substantially disk shape, and peripheral wall 222 that extends upward from an outer peripheral edge of the bottom wall body and is detachably attached to tubular body 21. Examples of a method for attaching and detaching bottom wall 22 as described above to and from tubular body 21 includes a method for providing screw structure in peripheral wall 222 and tubular body 21 to relatively rotate tubular body 21 and bottom wall 22. Here, peripheral wall 222 in the present exemplary embodiment has a height that is set to allow a finger of a user or the like to reach a bottom surface (i.e., an upper surface of bottom wall body 221: inner surface) in a state where bottom wall 22 is removed from tubular body 21. This configuration enables the inner surface of tank 2 to be cleaned without using a long cleaning brush or the like.

Between tubular body 21 and peripheral wall 222, packing 2221 as a seal member is disposed. Packing 2221 is detachably attached to a groove formed in an outer peripheral surface of peripheral wall 222 continuously in a circumferential direction. When bottom wall 22 is attached to tubular body 21 in a state where peripheral wall 222 is inserted inside tubular body 21, packing 2221 is brought into close contact with tubular body 21 and bottom wall 22. This configuration allows a space between tubular body 21 and bottom wall 22 to be sealed by packing 2221 as a seal member. Alternatively, the space between tubular body 21 and bottom wall 22 may be sealed by providing a groove in an inner peripheral surface of tubular body 21 and detachably attaching packing in the groove.

As illustrated in Figs. 5 and 6, device body 3 includes housing 31 constituting an outer shell of device body 3. Housing 31 is formed in a tubular shape with closed opposite ends in the vertical direction. Housing 31 (i.e., one element of device body 3) is also formed with a cross-sectional shape of a perfect circle so as to be rotatable relative to tank 2.

Thus, housing 31 in the present exemplary embodiment includes top wall 311 in a substantially disk shape, peripheral wall 312 in a substantially cylindrical shape extending downward from an outer peripheral edge of top wall 311, and bottom wall 313 in a substantially disk shape provided to close a lower opening of peripheral wall 312.

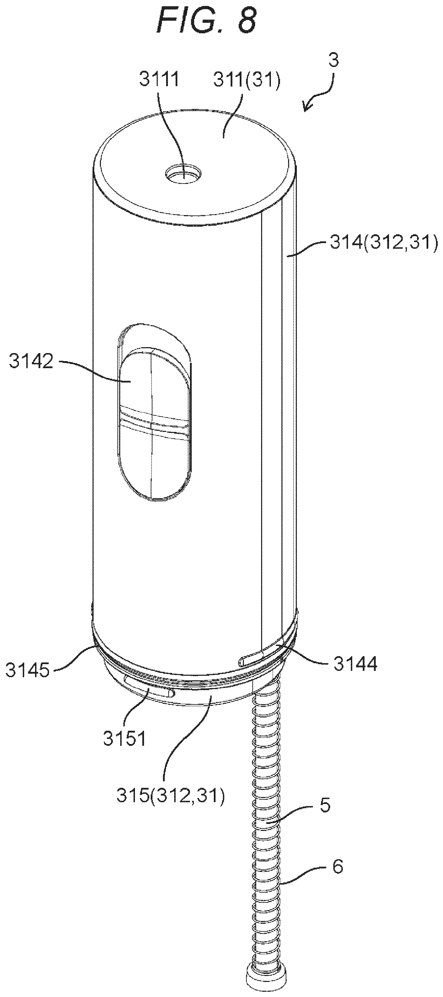

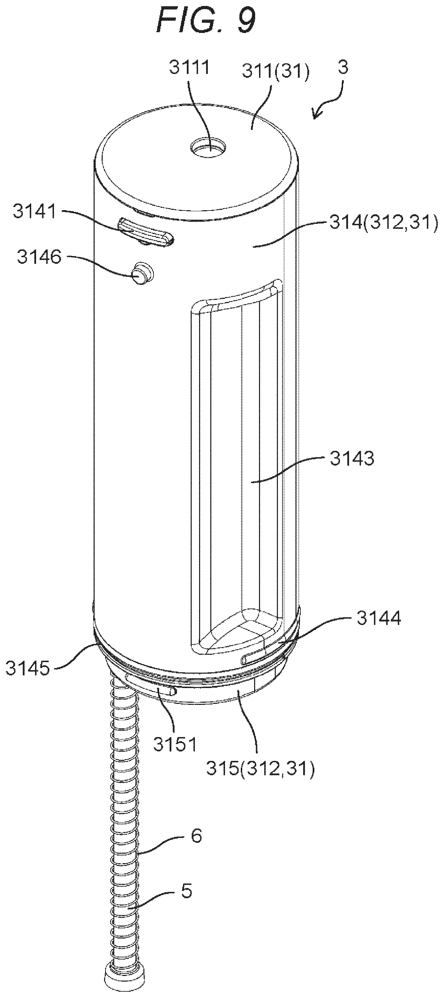

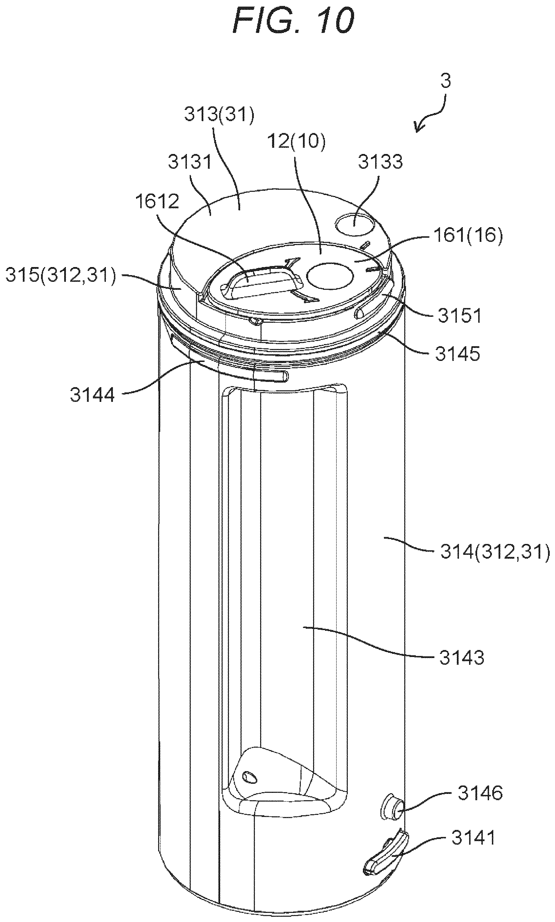

Fig. 8 is a perspective view of device body 3 of oral cleansing device 1 according to the present exemplary embodiment as viewed from above in one direction. Fig. 9 is a perspective view of device body 3 of oral cleansing device 1 according to the present exemplary embodiment as viewed from above in another direction. Fig. 10 is a perspective view of device body 3 of oral cleansing device 1 according to the present exemplary embodiment as viewed from below. As illustrated in Figs. 8 and 9, top wall 311 is provided with nozzle attachment part 3111 that is formed in a hollow elongated shape to detachably attach nozzle 4 capable of discharging (i.e., ejecting) a liquid from its distal end. On the other hand, bottom wall 313 is provided with tube attachment part 3133 to which tube 5 is attached, as illustrated in Fig. 10.

In the present exemplary embodiment, tube 5 is integrally attached to tube attachment part 3133, and is configured to be disposed in reservoir 2a of tank 2 when device body 3 is attached to tank 2 in a slidable manner. A liquid stored in reservoir 2a is introduced into housing 31 (i.e., one element of device body 3) through tube 5.

As illustrated in Fig. 6, coil spring 6 that holds an attitude extending in a length direction of tube 5 is disposed around tube 5. Disposing coil spring 6 as described above around tube 5 enables tube 5 to be wound without being bent when device body 3 is housed in tank 2, and thus enables tube 5 to be housed tidily in tank 2. Disposing coil spring 6 around tube 5 also enables tube 5 to be neatly extended from the wound state when device body 3 is pulled out from tank 2.

As illustrated in Fig. 1, housing 31 (i.e., one element of device body 3) is provided inside with flow path 32 through which a liquid introduced through tube 5 can pass and be supplied to nozzle 4. In the present exemplary embodiment, flow path 32 is provided inside housing 31 (i.e., one element of device body 3) so as to have one end communicating with an inner space of nozzle attachment part 3111 and another end communicating with an inner space of tube attachment part 3133. This configuration allows the liquid introduced through tube 5 to be supplied to nozzle 4 through flow path 32.

Flow path 32 includes suction path 321 disposed upstream of flow path 32 and discharge path 322 disposed downstream of flow path 32 in the present exemplary embodiment. Suction path 321 and discharge path 322 are connected via pump 323. When pump 323 is operated, the liquid in reservoir 2a is sucked up through tube 5 and passes through flow path 32 to be discharged (i.e., ejected) from the distal end of nozzle 4.

Pump 323 includes motor 3231, cam 3232, piston 3233, and pump chamber 3234. Motor 3231 is driven by electric power supplied from battery 7 housed in device body 3. Examples of battery 7 used at this time include a dry battery and a rechargeable battery (hereinafter, referred to as a "rechargeable battery in the shape of a dry battery") which is identical in shape to the dry battery and compatible with the dry battery.

Cam 3232 is a member that converts rotation of motor 3231 into an axial operating force, and piston 3233 is a member that reciprocates along the vertical direction of device body 3 by the axial operating force converted by cam 3232. An end part of piston 3233 is disposed in pump chamber 3234, and pump chamber 3234 has a volume that is changed by the reciprocation of piston 3233. Pump chamber 3234 communicates with suction path 321 and discharge path 322 provided inside device body 3. Between pump chamber 3234 and suction path 321, a suction valve (not illustrated) is provided, and a discharge valve (not illustrated) is provided between pump chamber 3234 and discharge path 322.

When piston 3233 is moved in a direction of increasing the volume of pump chamber 3234 by driving of motor 3231, the liquid in tank 2 flows into pump chamber 3234 through tube 5 and suction path 321. After that, when piston 3233 is moved in a direction of reducing the volume of pump chamber 3234 in a state where the liquid has flowed into pump chamber 3234, the liquid in pump chamber 3234 is supplied to nozzle 4 through discharge path 322. The liquid supplied to nozzle 4 is then discharged (i.e., ejected) from the distal end of nozzle 4 to the outside.

As described above, oral cleansing device 1 is driven by battery 7 in the present exemplary embodiment.

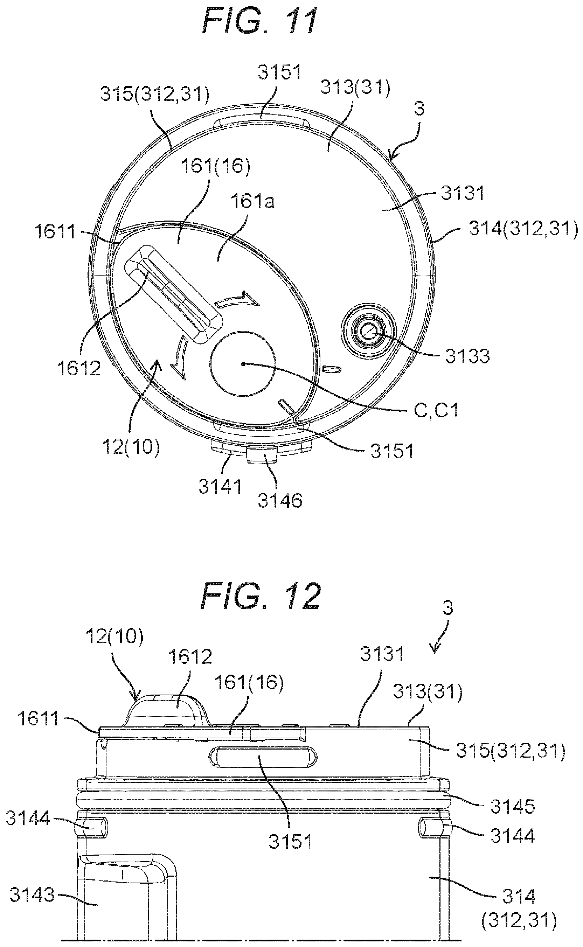

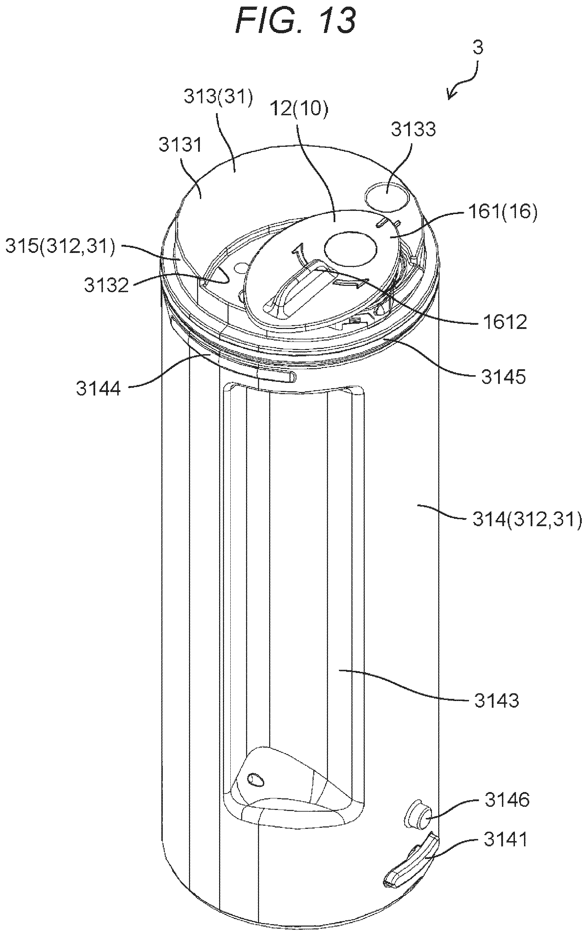

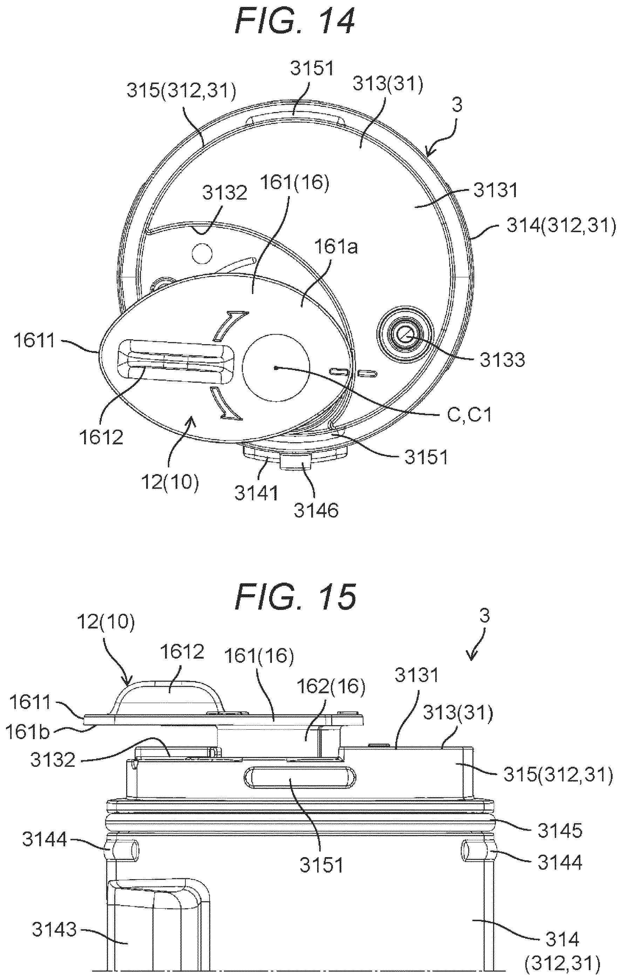

Fig. 11 is a diagram illustrating a back surface of device body 3 of oral cleansing device 1 according to the present exemplary embodiment. Figs. 12 to 15 are each a diagram illustrating device body 3 of oral cleansing device 1 according to the present exemplary embodiment. Fig. 12 is an enlarged side view illustrating a lower end of device body 3 inverted. Fig. 13 is a perspective view of device body 3 with battery cover 12 in an open state as viewed from below. Fig. 14 is a diagram illustrating a back surface of device body 3 with battery cover 12 in an open state. Fig. 15 is an enlarged side view illustrating a lower end of device body 3 with battery cover 12 in an open state, device body 3 being inverted. As illustrated in Figs. 8 to 15, peripheral wall 312 includes large-diameter part 314 having a relatively large diameter, and small-diameter part 315 having a smaller diameter than large-diameter part 314 and being connected to a lower end of large-diameter part 314. Small-diameter part 315 is formed only on the lower end of peripheral wall 312 in the present embodiment, and thus most of peripheral wall 312 is large-diameter part 314.

As illustrated in Fig. 10, large-diameter part 314 is provided in its upper end part with button 3141 that can be pressed inward, and when button 3141 is pressed, nozzle 4 can be detached from housing 31 (i.e., one element of device body 3). As illustrated in Fig. 8, large-diameter part 314 is provided with power supply switch 3142 for starting or stopping oral cleansing device 1 (i.e., switching between on and off states of a power supply).

Further, as illustrated in Fig. 9, large-diameter part 314 further includes nozzle housing 3143 in the shape of a groove shape formed in a height direction of device body 3, nozzle housing 3143 being capable of housing nozzle 4. When oral cleansing device 1 is not used, nozzle 4 can also be housed in tank 2 by pushing device body 3 into tank 2 in a state where nozzle 4 is removed from device body 3 is housed in nozzle housing 3143. This configuration enables nozzle 4 detached from device body 3 to be handled together with device body 3, so that nozzle 4 can be easily managed.

As illustrated in Figs. 2 to 4, tubular body 21 of tank 2 has a side surface with an upper part including drying hole 213 passing through a peripheral wall of tubular body 21 in the present exemplary embodiment, and drying hole 213 is disposed facing nozzle housing 3143 of device body 3 in a state where device body 3 is housed in tank 2. This configuration enables nozzle 4 housed in nozzle housing 3143 to be dried more efficiently. Drying hole 213 is disposed facing a bottom wall of nozzle housing 3143 of device body 3 in a state where device body 3 is pulled out from tank 2. This configuration enables a liquid accumulated in nozzle housing 3143 during use of oral cleansing device 1 to be discharged through drying hole 213.

In the present exemplary embodiment, large-diameter part 314 is also formed with an outer diameter slightly smaller than an inner diameter of tubular body 21, so that large-diameter part 314 can be slid up and down inside reservoir 2a of tank 2 (i.e., inside tubular body 21). In contrast, small-diameter part 315 is formed with an outer diameter slightly smaller than an inner diameter of peripheral wall 222 of bottom wall 22, so that small-diameter part 315 is inserted into peripheral wall 222 of bottom wall 22 in a state where device body 3 is housed in tank 2.

When device body 3 is brought into a pulled-out state in which device body 3 is pulled out from tank 2, device body 3 and tank 2 are locked to prevent device body 3 from being housed in tank 2 during use of oral cleansing device 1. Similarly, when device body 3 is brought into a housed state in which device body 3 is housed in tank 2, device body 3 and tank 2 are locked to prevent device body 3 from being pulled out from tank 2.

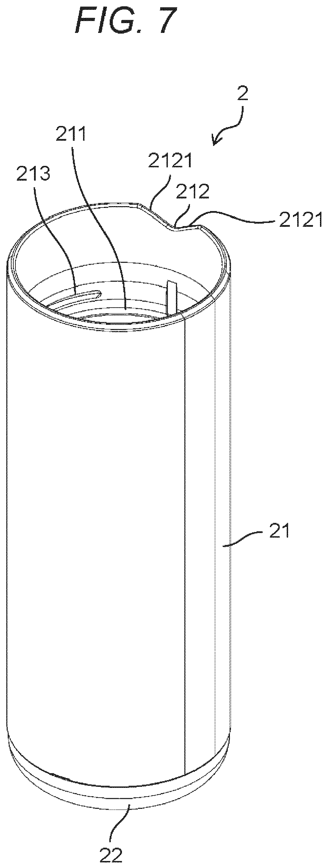

Specifically, large-diameter part 314 is provided at a lower end on its outer periphery with pull-out protrusion 3144 protruding outward in the radial direction, as illustrated in Figs. 8 to 15. Fig. 7 is a perspective view illustrating tank 2 of oral cleansing device 1 according to the present exemplary embodiment. As illustrated in Fig. 7, tubular body 21 of the tank 2 is provided at an upper end on its inner periphery with pull-out recess 211 releasably engaged with pull-out protrusion 3144. When device body 3 is pulled out from tank 2, pull-out protrusion 3144 and pull-out recess 211 are engaged with each other, and thus device body 3 is held in tank 2 in a pulled-out state, as illustrated in Fig. 6.

In the present exemplary embodiment, pull-out protrusion 3144 is formed extending in the circumferential direction of large-diameter part 314 and a plurality of (two in the present exemplary embodiment) pull-out protrusions 3144 is provided in the circumferential direction. On the other hand, pull-out recess 211 is formed continuously in the circumferential direction of tubular body 21, and can be engaged with the plurality of pull-out protrusions 3144.

In the present exemplary embodiment, pull-out protrusions 3144 are each provided at a position overlapping with tank 2 in front view in a state where device body 3 is attached to tank 2. This configuration causes pull-out protrusions 3144 to be prevented from being exposed from tank 2 in front view in a state where device body 3 is attached to tank 2, and thus enables design properties to be enhanced by hiding unnecessary unevenness.

In addition, large-diameter part 314 is provided in a lower end of its outer periphery with a groove formed continuously in the circumferential direction throughout its circumference, and packing 3145 as a seal member is detachably attached to the groove. When device body 3 is attached to tank 2, packing 3145 is brought into close contact with large-diameter part 314 and tubular body 21. This configuration allows a space between housing 31 (i.e., one element of device body 3) and tubular body 21 to be sealed by packing 3145 as a seal member. Alternatively, the space between housing 31 (i.e., one element of device body 3) and tubular body 21 may be sealed by providing a groove in an inner peripheral surface of tubular body 21 and detachably attaching packing in the groove.

As illustrated in Figs. 8 to 15, small-diameter part 315 is provided on its outer periphery with housing protrusion 3151 protruding outward in the radial direction. As illustrated in Fig. 5, peripheral wall 222 of bottom wall 22 is provided in its inner periphery with housing recess 2222 releasably engaged with housing protrusion 3151. When device body 3 is housed in tank 2, housing protrusion 3151 and housing recess 2222 are engaged with each other, and thus device body 3 is held in tank 2 in a housed state.

Housing protrusion 3151 is formed extending in the circumferential direction of small-diameter part 315 in the present exemplary embodiment, and a plurality of (two in the present exemplary embodiment) housing protrusions 3151 is provided in the circumferential direction. On the other hand, housing recess 2222 is formed in peripheral wall 222 in the circumferential direction to have a circumferential length longer than housing protrusion 3151, and a plurality of (two in the present exemplary embodiment) housing recesses 2222 is provided in the circumferential direction.

This configuration causes housing protrusion 3151 and housing recess 2222 to be engaged with each other when device body 3 is housed in tank 2, and thus enables device body 3 to be held at a housing position with respect to tank 2. At this time, tube 5 is housed between device body 3 and tank 2 in a state of being wound multiple times as illustrated in Fig. 5. As described above, when device body 3 is in a housed state in the present exemplary embodiment, a space (i.e., reservoir 2a) formed between a lower surface of device body 3 and an upper surface of bottom wall 22 of tank 2 can be effectively used as tube housing space 2b for housing tube 5.

Tube housing space 2b formed in a housed state of device body 3 preferably has a height larger than diameter D1 (i.e., a tube diameter) of tube 5. This configuration enables tube 5 housed in a state of being wound multiple times to be prevented from being crushed by device body 3 in the housed state of device body 3.

In the present exemplary embodiment, housing protrusion 3151 is also provided overlapping with tank 2 in front view in a state where device body 3 is attached to tank 2. This configuration causes housing protrusions 3151 to be prevented from being exposed from tank 2 in front view in a state where device body 3 is attached to tank 2, and thus enables design properties to be enhanced by hiding unnecessary unevenness.

However, when housing protrusion 3151 is prevented from being exposed from tank 2 in front view in a state where device body 3 is attached to tank 2, an engagement state and a disengagement state between housing protrusion 3151 and housing recess 2222 are less likely to be visually recognized even when tank 2 is made transparent. Thus, in the present exemplary embodiment, tank 2 includes a marked part (see marked protrusion 3146 and a marked recess, which will be described below) by which an engagement state between housing protrusion 3151 and housing recess 2222 can be checked, the marked part being provided at a place visible from the outside as illustrated in Figs. 2 to 4.

Specifically, large-diameter part 314 is provided at an upper end of its outer periphery with marked protrusion 3146 that protrudes radially outward, and tubular body 21 is provided at its upper end with marked recess 212 that engages with marked protrusion 3146 when housing protrusion 3151 and housing recess 2222 are engaged with each other. The user or the like can visually recognize an engagement state between marked protrusion 3146 and marked recess 212 to recognize that housing protrusion 3151 and housing recess 2222 are engaged with each other.

Marked recess 212 in the present exemplary embodiment further includes inclined surfaces 2121 that are inclined upward from a bottom part configured to engage with marked protrusion 3146, and that are provided on respective sides in the circumferential direction across the bottom part. This configuration causes marked protrusion 3146 to move while sliding along corresponding one of inclined surfaces 2121 when device body 3 is rotated relative to tank 2 to release engagement between housing protrusion 3151 and housing recess 2222. That is, device body 3 in a housed state is rotated relative to tank 2 to move marked protrusion 3146 along the corresponding one of inclined surfaces 2121, so that device body 3 is moved upward to come out of tank 2. Thus, this configuration enables disengagement between housing protrusion 3151 and housing recess 2222 to be assisted by inclined surfaces 2121.

When marked protrusion 3146 finishes moving along the corresponding one of inclined surfaces 2121, marked protrusion 3146 is disposed at an opening edge of tubular body 21. Thus, it can be recognized that the engagement between housing protrusion 3151 and housing recess 2222 is released. As described above, in the present exemplary embodiment, the user or the like can recognize that engagement between housing protrusion 3151 and housing recess 2222 is released by visually recognizing disengagement between marked protrusion 3146 and marked recess 212.

**In** the present exemplary embodiment a liquid is allowed to be supplied to reservoir 2a in tank 2 even when tank 2 is disposed sideways.

Specifically, tank 2 is provided in its side part (i.e., tubular body 21) with liquid supply hole 214 through which a liquid can be injected into reservoir 2a as illustrated in Fig. 5. Liquid supply hole 214 is disposed to be located below packing 3145 when device body 3 is pulled out from tank 2. Liquid supply hole 214 is also disposed to be located above packing 3145 when device body 3 is housed in tank 2. This configuration prevents liquid supply hole 214 from interfering with packing 3145, and thus enables sealability of packing 3145 to be maintained. In this way, liquid supply hole 214 is configured to be closed by liquid supply lid 24.

In the present exemplary embodiment, liquid supply lid 24 includes a closing part having a larger outer diameter than liquid supply hole 214. The closing part has a contour formed as curved surfaces on respective sides in the vertical direction and formed as straight track ellipses on respective sides in a horizontal direction. The closing part has an outer surface curved along a side surface shape of tank 2, so that design properties can be enhanced.

As illustrated in Fig. 5, liquid supply lid 24 is attached to tank 2 using hinge 241 to be openable in the vertical direction, and packing 242 as a seal member is detachably attached between liquid supply hole 214 and liquid supply lid 24. When liquid supply lid 24 closes liquid supply hole 214, liquid supply hole 214 and liquid supply lid 24 are sealed by packing 242.

In the present exemplary embodiment, an end of liquid supply lid 24 is disposed within a range of a side surface of tank 2 in front view in a state where liquid supply lid 24 is opened. In other words, the end part opposite to hinge 241 of liquid supply lid 24 is disposed at a position without protruding from a lower end of the side surface of tank 2 in front view in a state liquid supply lid 24 is opened. This configuration enables the end part of liquid supply lid 24 to be prevented from interfering with a peripheral member when liquid supply lid 24 is opened, and thus enables suppressing influence on hinge 241.

As described above, oral cleansing device 1 according to the present exemplary embodiment is driven by battery 7. Thus, oral cleansing device 1 includes battery housing 10 in which battery 7 can be housed.

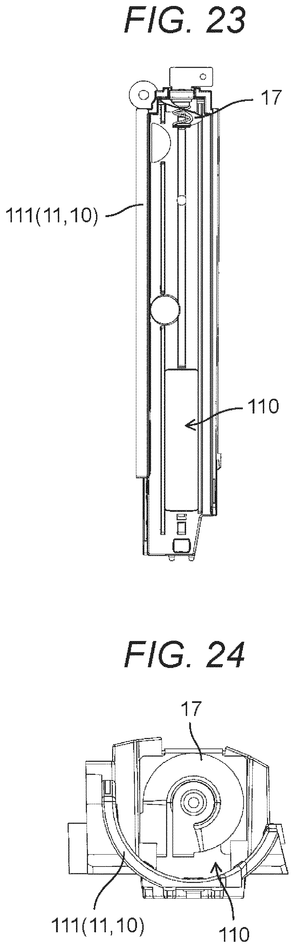

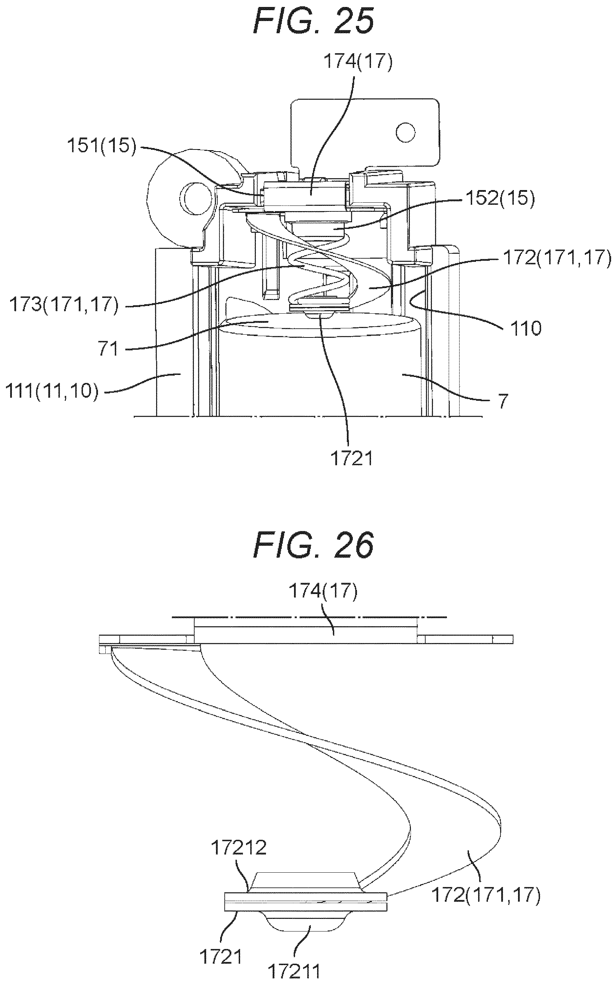

As illustrated in Fig. 5, in the present exemplary embodiment, device body 3 includes battery housing 10, and battery housing 10 includes body 11 provided in housing 31. In the present exemplary embodiment, body 11 includes battery base 111 that is disposed inside housing 31 and is capable of holding battery 7 (typically, see Figs. 23 and 25), and a part facing battery 7 held by battery base 111 in housing 31. Housing space 110 in which battery 7 can be housed is formed inside body 11 (typically, see Figs. 23 and 25). That is, a space defined by battery base 111 and the part facing battery 7 held by battery base 111 in housing 31 serve as housing space 110 capable of housing battery 7. As described above, housing space 110 is formed inside housing 31, and battery 7 is incorporated in housing 31, in the present exemplary embodiment.

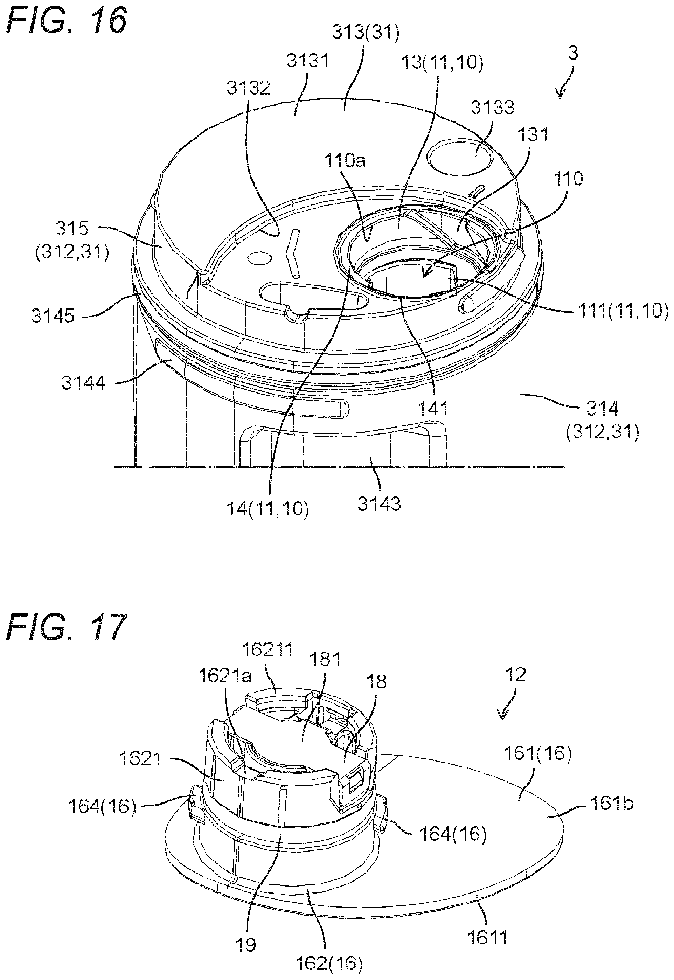

Fig. 16 is a perspective view illustrating device body 3 of oral cleansing device 1 according to the present exemplary embodiment, and illustrating a lower end of device body 3 in an enlarged manner in a state where device body 3 in which battery cover 12 is removed is inverted. As illustrated in Fig. 16, in the present exemplary embodiment, housing space 110 is formed to be open downward when oral cleansing device 1 is placed in a normal state (i.e., in a state where device body 3 is not inverted). That is, housing space 110 is formed passing through bottom wall 313 of housing 31 in the vertical direction, and an opening formed in bottom surface 3131 of bottom wall 313 serves as opening 110a of housing space 110.

When battery 7 is inserted into housing space 110 from below opening 110a (i.e., from below bottom wall 313), battery 7 is incorporated in housing 31. As illustrated in Fig. 5, two batteries 7 are disposed in housing 31 (strictly in housing space 110) in a state of being aligned on a straight line in the vertical direction with their longitudinal directions substantially aligning with the vertical direction, in the present exemplary embodiment. As described above, housing space 110 elongated in the vertical direction is formed in housing 31 in the present exemplary embodiment. This configuration causes battery housing 10 to be reduced in size and space in the radial direction, and thus enables the space in housing 31 to be more effectively utilized. Two batteries 7 are connected in series in the present exemplary embodiment. That is, two batteries 7 are held on battery base 111 (typically, see Figs. 23 and 25) in housing 31 in a state where negative electrode 71 of one battery 7 is in contact with positive electrode 72 of another battery 7.

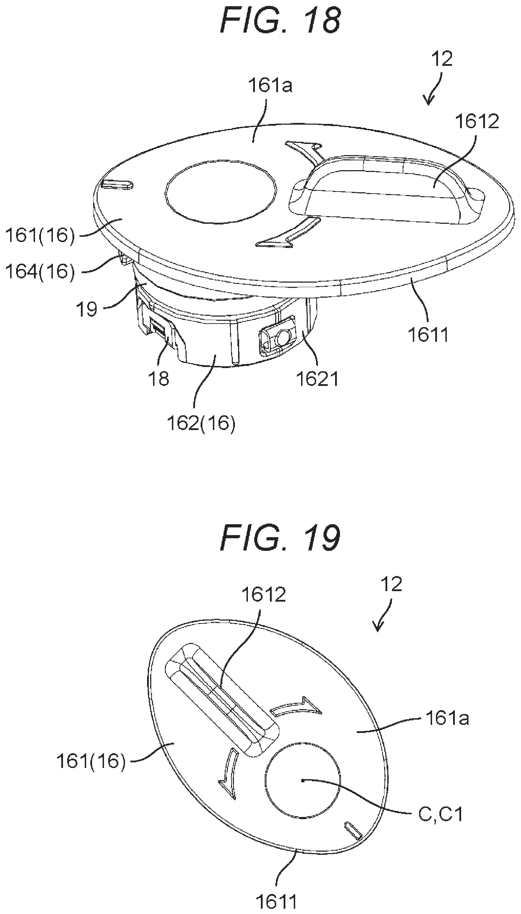

Fig. 17 is a perspective view of battery cover 12 of oral cleansing device 1 according to the present exemplary embodiment as viewed from inside. Fig. 18 is a perspective view of battery cover 12 of oral cleansing device 1 according to the present exemplary embodiment as viewed from outside. As illustrated in Figs. 17 and 18, in the present exemplary embodiment, battery housing 10 further includes battery cover 12 that closes opening 110a of housing space 110. Battery cover 12 is detachably attached to body 11, and battery 7 can be taken in and out at the time of replacement or the like by removing battery cover 12 from body 11. As described above, oral cleansing device 1 according to the present exemplary embodiment is a battery-replaceable device capable of replacing battery 7 as a drive source.

In the present exemplary embodiment, battery cover 12 is configured to close housing space 110 that is open downward when oral cleansing device 1 is placed in the normal state, so that battery cover 12 is positioned at a lower part of body 11 in the normal state of oral cleansing device 1. That is, when battery cover 12 is attached to body 11, battery cover 12 is attached at a lower part of housing 31 of device body 3 in the normal state of oral cleansing device 1. Additionally, oral cleansing device 1 according to the present exemplary embodiment is an oral cleansing device with a telescopic tank, so that battery cover 12 is housed in tank 2 when tank 2 is attached to device body 3.

In the present exemplary embodiment, as described above, battery cover 12 is positioned at the lower part of body 11 in the normal state of oral cleansing device 1, so that battery cover 12 is less likely to be visible. Additionally, battery cover 12 is housed in tank 2 when tank 2 is attached to device body 3, so that battery cover 12 can be hidden in tank 2. This configuration improves appearance quality of oral cleansing device 1 to improve design properties of oral cleansing device 1. Battery cover 12 is housed in tank 2 so that dirt (such as food debris) generated during use of oral cleansing device 1 can be prevented from adhering to battery cover 12. Battery cover 12 is housed in tank 2 so that accumulation of dust on battery cover 12 when oral cleansing device 1 is housed (such as when the oral cleansing device is not in use and placed on a wash basin or the like) also can be prevented.

When battery cover 12 is housed in tank 2 in a state where tank 2 is attached to device body 3, nozzle 4 is attached to device body 3 on a side opposite to a side to which battery cover 12 is attached. Thus, during use of oral cleansing device 1, a liquid discharged from nozzle 4 can be prevented from splashing on battery cover 12.

In the present exemplary embodiment, battery cover 12 is provided with an attached terminal (i.e., any one of negative electrode terminal 17 and positive electrode terminal 18, here, positive electrode terminal 18) that is electrically connected to an electrode (i.e., any one of negative electrode 71 and positive electrode 72, here, positive electrode 72) of battery 7. When battery cover 12 is not attached to body 11, there is no energization (i.e., electric power cannot be supplied to motor 3231). Specifically, a terminal electrically connected to an electrode on one side of battery 7 is provided backward (i.e., upward) of body 11, so that the terminal is electrically connected to the electrode on the one side of battery 7 when battery 7 is inserted and held in housing space 110. Fig. 23 is a side view illustrating battery base 111 of oral cleansing device 1 according to the present exemplary embodiment. Fig. 24 is a plan view illustrating battery base 111 of oral cleansing device 1 according to the present exemplary embodiment. As illustrated in Fig. 23, a terminal (negative electrode terminal 17 in Fig. 23) is provided on a wall (i.e., a top wall) on a back side of battery base 111 in the present exemplary embodiment, so that an electrode (here, negative electrode 71) on one side of battery 7 positioned backward (i.e., upward) is brought into contact with a terminal (here, negative electrode terminal 17) in a state where two batteries are held on battery base 111. When battery cover 12 is attached to body 11 in the state, a terminal (here, positive electrode terminal 18) close to battery cover 12 is electrically connected to an electrode (here, positive electrode 72) on the other side of battery 7 on a front side (i.e., a lower side). This configuration enables electric power to be supplied to motor 3231.

By the way, to enable battery 7 to be taken in and out of housing space 110, a clearance to some extent is required to be provided between battery 7 housed in housing space 110 and body 11. Thus, battery 7 housed in housing space 110 can be moved to some extent in the radial direction in housing space 110. When terminals (i.e., negative electrode terminal 17 and positive electrode terminal 18) are electrically connected to battery 7, at least one of the terminals has spring properties to secure contact pressure with battery 7. Here, battery 7 includes negative electrode 71 that has a flat surface, and positive electrode 72 that has a protrusion. That is, battery 7 has parts to be brought into contact with respective terminals, the parts including one part at positive electrode 72 that has a smaller area than the other part at negative electrode 71. Thus, negative electrode terminal 17 typically has spring properties to enable electrical connection and contact pressure to be secured more reliably even when battery 7 is displaced.

For this reason, when negative electrode terminal 17 is to be attached to battery cover 12, negative electrode terminal 17 needs to be increased in size due to necessity to secure electrical connection and contact pressure more reliably.

Reduction in size of spring structure may cause the spring to be fatigued or damaged, so that suppressing the fatigue and damage of the spring requires negative electrode terminal 17 to be further increased in size to increase strength of the spring.

When negative electrode terminal 17 is attached to battery cover 12 as described above, there is a problem that battery cover 12 increases in size.

Thus, positive electrode terminal 18 is attached to battery cover 12 in the present exemplary embodiment to enable reduction in size of battery housing 10 in which battery 7 can be housed.

Specifically, battery cover 12 includes only positive electrode terminal 18 out of negative electrode terminal 17 electrically connected to negative electrode 71 of battery 7 and positive electrode terminal 18 electrically connected to positive electrode 72 of battery 7. As described above, in the present exemplary embodiment, battery cover 12 is provided with the terminal connected to battery 7 and without negative electrode terminal 17, and thus is provided with only positive electrode terminal 18.

Body 11 includes negative electrode terminal 17 electrically connected to positive electrode terminal 18 of battery cover 12 through battery 7.

As described above, in the present exemplary embodiment, as illustrated in Fig. 17, battery cover 12 configured to close opening 110a of housing space 110 includes only positive electrode terminal 18 out of negative electrode terminal 17 and positive electrode terminal 18, and negative electrode terminal 17 is provided on body 11 as illustrated in Fig. 23.

This configuration enables suppressing an increase in size of battery cover 12 in the radial direction as compared with when negative electrode terminal 17 is provided in battery cover 12. As described above, battery 7 includes positive electrode 72 with a protrusion, and positive electrode 72 of battery 7 is electrically connected to positive electrode terminal 18 by bringing a tip of the protrusion relatively small is size into contact with positive electrode terminal 18. Thus, even when positional displacement of battery 7 is taken into consideration, energization part 181 of positive electrode terminal 18 only needs to be formed in a central part of housing space 110. That is, energization part 181 of positive electrode terminal 18 can have an area smaller than an area of battery 7 as viewed along the longitudinal direction. In the present exemplary embodiment, positive electrode terminal 18 has an upper end surface serving as energization part 181 that is in contact with positive electrode 72 of battery 7.

This configuration enables not only an opening area of housing space 110 (i.e., an area of opening 110a) to be reduced as much as possible, but also a size of body 11 (i.e., a radial size) to which battery cover 12 is attached to be reduced to downsize battery cover 12. As described above, in the present exemplary embodiment, battery housing 10 can be downsized by attaching positive electrode terminal 18 to battery cover 12.

In the present exemplary embodiment, negative electrode terminal 17 has spring properties. That is, negative electrode terminal 17 includes spring part 171 (see Figs. 25 and 26). Providing spring part 171 on negative electrode terminal 17 as described above enables securing necessary and sufficient contact pressure (i.e., contact pressure between battery 7 and a terminal).

Negative electrode terminal 17 having a spring structure is not provided in the battery cover 12, whereas negative electrode terminal 17 having a spring structure is provided on the back side of housing space 110 formed in body 11. Battery cover 12 is positioned at the lower part of body 11 when oral cleansing device 1 is placed in the normal state.

This configuration allows spring part 171 of negative electrode terminal 17 to be positioned above battery 7 housed in housing space 110 when oral cleansing device 1 is placed in the normal state. This configuration also enables preventing a load of battery 7 from being applied to spring part 171 as much as possible, so that spring part 171 can be prevented from being fatigued. When battery cover 12 is not provided with negative electrode terminal 17 having a spring structure, spring part 171 can be prevented from being detached when battery 7 is replaced.

Fig. 25 is an enlarged perspective view illustrating a back side of battery base 111 of oral cleansing device 1 which shows an embodiment of the invention. As illustrated in Fig. 25, in the present embodiment, spring part 171 includes leaf spring 172 and coil spring 173. Leaf spring 172 is formed in a spiral shape, and has one end (i.e., an upper end) connected to terminal body 174 fixed to negative electrode terminal holder 15 of body 11. Leaf spring 172 has the other end (i.e., a lower end) provided with battery contact part 1721 that is in contact with negative electrode 71 of battery 7. Coil spring 173 is disposed inside leaf spring 172, which is formed in a spiral shape, to support battery contact part 1721.

In the present embodiment, negative electrode terminal holder 15 is provided on a top wall of battery base 111, and includes attachment part 151 to which terminal body 174 is attached, and boss 152 formed protruding downward at the center of a lower end of attachment part 151. Boss 152 supports an upper end of coil spring 173. That is, in the present exemplary embodiment, coil spring 173 has a lower end supporting battery contact part 1721 of leaf spring 172 in a state of having an upper end supported by boss 152.

Further, in the present exemplary embodiment, boss 152 has the amount of downward protrusion that is set to allow battery contact part 1721 to come into contact with boss 152 in a state where coil spring 173 has a length longer than its solid length. This configuration prevents coil spring 173 from further contracting even when a large load in a contracting direction is applied to spring part 171, such as when battery 7 is inserted reversely or when a device such as oral cleansing device 1 or device body 3 is dropped. That is, when a large load in the contracting direction is applied to spring part 171, contraction of coil spring 173 to the solid length is restricted by battery contact part 1721 in contact with boss 152. This configuration suppresses plastic deformation of leaf spring 172 and coil spring 173 due to application of a large load in the contracting direction. The solid length of coil spring 173 is a length when coil spring 173 is most contracted.

In the present exemplary embodiment, as described above, boss 152 has a function as a contraction restricting part that restricts contraction of spring part 171 in a state where coil spring 173 has a length longer than the solid length. That is, body 11 includes boss 152 as a contraction restricting part that restricts contraction of spring part 171 in a state where coil spring 173 has a length longer than the solid length. The contraction restricting part does not need to be boss 152, as long as contraction of spring part 171 can be restricted before coil spring 173 contracts to the solid length. For example, when terminal body 174 is attached to attachment part 151 in such a way that one end (i.e., an upper end) of each of leaf spring 172 and coil spring 173 is positioned backward (i.e., upward) of attachment part 151, battery contact part 1721 can be brought into contact with attachment part 151 before coil spring 173 contracts to the solid length. In this case, attachment part 151 itself has a function as a contraction restricting part.

Fig. 26 is a side view illustrating leaf spring 172 of oral cleansing device 1 according to the present exemplary embodiment. As illustrated in Fig. 26, battery contact part 1721 is processed for forming a protrusion serving as protrusion 17211 protruding toward battery 7, protrusion 17211 being provided on battery contact part 1721. This configuration enables contact between negative electrode terminal 17 and battery 7 to be further stabilized. Battery contact part 1721 is provided above (i.e., on a side on which coil spring 173 is positioned) with a groove formed by burring, and the groove is engaged with the other end (i.e., a lower end) of coil spring 173. This configuration prevents coil spring 173 from being displaced with respect to leaf spring 172. As described above, in the present exemplary embodiment, battery contact part 1721 (i.e., one element of leaf spring 172) includes positional displacement prevention part 17212 that prevents positional displacement of coil spring 173. This configuration enables separation between leaf spring 172 and coil spring 173 to be more reliably prevented.

Although spring part 171 formed using only coil spring 173 can secure contact pressure with battery 7, using only coil spring 173 increases conductor resistance because coil spring 173 is typically made of iron. Thus, when only coil spring 173 is used, a voltage drop occurs to reduce voltage to be applied to motor 3231, thereby resulting in decrease in output of motor 3231.

For this reason, leaf spring 172 and coil spring 173 are used in the present exemplary embodiment to reduce the conductor resistance as much as possible. Thus, in the present exemplary embodiment, leaf spring 172 is made of a material having low conductor resistance. Although examples of a material having low conductor resistance include phosphor bronze and silver, leaf spring 172 is preferably made of phosphor bronze that can be obtained relatively inexpensively. This configuration enables spring part 171 having low conductor resistance to be obtained at low cost.

Alternatively, when spring part 171 is formed using only leaf spring 172, spring part 171 having low conductor resistance can be formed. However, leaf spring 172 needs to be increased in size to secure its strength. That is, leaf spring 172 needs to be increased in width. This leaf spring 172 causes a difficulty in reducing battery housing 10 in size.

In contrast, when leaf spring 172 and coil spring 173 are used as in the present exemplary embodiment, spring part 171 can secure contact pressure with battery 7 with suppressing a voltage drop. When spring part 171 includes leaf spring 172 and coil spring 173, spring part 171 can be reduced in size while securing spring strength. Thus, even when battery 7 minimum in size of a standard is used, energization can be secured. Alternatively, even when battery 7 maximum in size of the standard is used, spring part 171 can be prevented from fatiguing.

When spring part 171 includes leaf spring 172 and coil spring 173 as described above, spring part 171 capable of securing contact pressure with suppressing a voltage drop can be formed with a simpler configuration, and spring part 171 can be more compact in size.

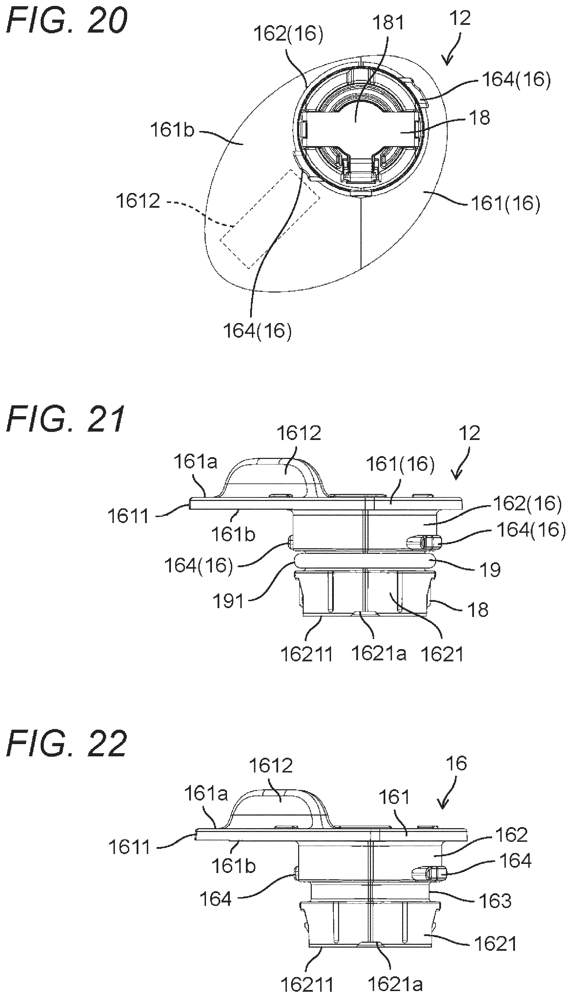

Fig. 19 is a plan view illustrating battery cover 12 of oral cleansing device 1 according to the present exemplary embodiment. Fig. 20 is a diagram illustrating a back surface of battery cover 12 of oral cleansing device 1 according to the present exemplary embodiment. Fig. 21 is a side view illustrating battery cover 12 of oral cleansing device 1 according to the present exemplary embodiment. Fig. 22 is a side view illustrating cover body 16 of oral cleansing device 1 according to the present exemplary embodiment. In the present exemplary embodiment, battery cover 12 includes cover body 16 as illustrated in Fig. 22, and positive electrode terminal 18 is attached to cover body 16 as illustrated in Figs. 17 to 21. Specifically, cover body 16 includes flat plate part 161, and insertion part 162 that is connected to and protrudes upward from inner surface 161b (i.e., an upper surface of flat plate part 161) of flat plate part 161 and that is inserted into housing space 110 when battery cover 12 is attached to body 11.

In the present exemplary embodiment, flat plate part 161 has a substantially elliptical shape in plan view (i.e., in a state viewed along the vertical direction) as illustrated in Figs. 19 and 20, and flat plate part 161 is housed in housing recess 3132 formed in bottom wall 313 of housing 31 in a state where battery cover 12 is attached to body 11 as illustrated in Figs. 13 to 15. Thus, in the present exemplary embodiment, opening 110a of housing space 110 is formed communicating with housing recess 3132 of bottom wall 313 as illustrated in Fig. 16.

As illustrated in Figs. 13 to 16, housing recess 3132 is formed in bottom wall 313 and is open downward and laterally, and flat plate part 161 is housed in housing recess 3132 when battery cover 12 is attached to body 11, in the present exemplary embodiment. Additionally, when battery cover 12 is attached to body 11, outer peripheral surface 1611 of flat plate part 161 is substantially flush with an outer surface of small-diameter part 315 as illustrated in Fig. 12. That is, when device body 3 is viewed from below with battery cover 12 attached to body 11 as illustrated in Fig. 11, flat plate part 161 is entirely present inside small-diameter part 315, and outer peripheral surface 1611 of flat plate part 161 constitutes a part of a contour of small-diameter part 315.

As described above, in the present exemplary embodiment, oral cleansing device 1 includes device body 3 in which body 11 is incorporated. When battery cover 12 is attached to body 11, battery cover 12 is disposed with its outer periphery along an outer periphery of bottom surface 3131 of device body 3. This configuration enables battery cover 12 to be prevented from unnaturally protruding from device body 3 when battery cover 12 is attached to body 11, thereby improving appearance quality of oral cleansing device 1 to improve design properties of oral cleansing device 1.

As illustrated in Fig. 17, insertion part 162 includes a distal end part (i.e., an upper end part) serving as positive electrode terminal attachment part 1621 to which positive electrode terminal 18 is attached, and positive electrode terminal 18 includes a part attached to distal end surface 1621a (i.e., a lower surface of positive electrode terminal attachment part 1621 of positive electrode terminal 18) of positive electrode terminal attachment part 1621, the part serving as energization part 181 of positive electrode terminal 18.

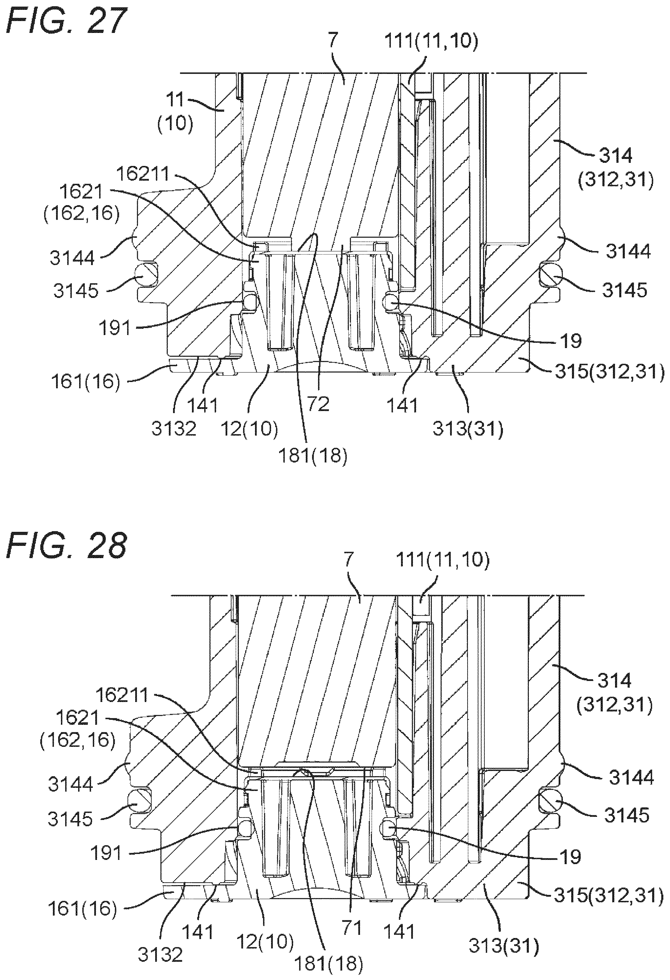

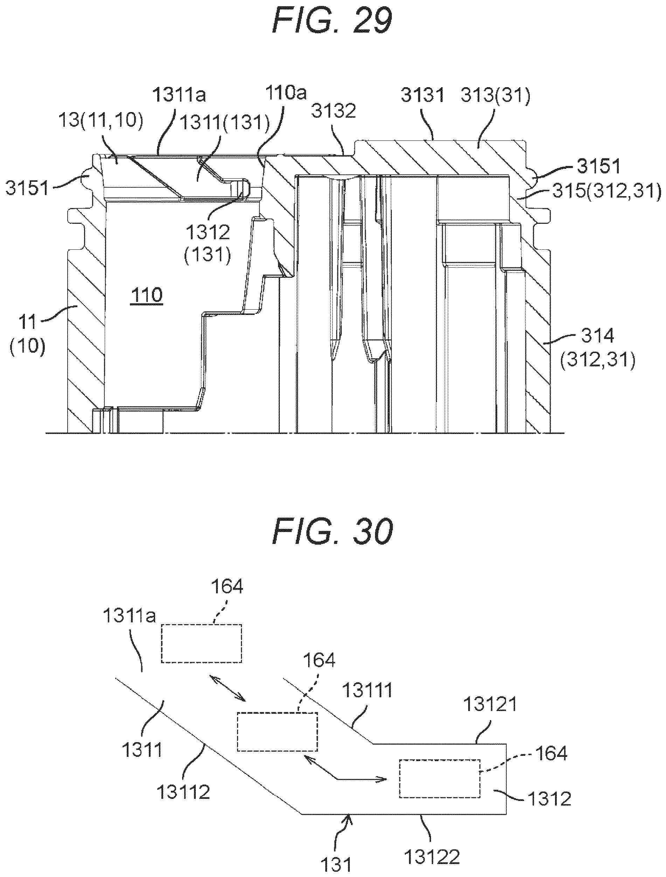

Figs. 27 to 29 are each a diagram illustrating battery housing 10 of oral cleansing device 1 according to the present exemplary embodiment. Fig. 27 is a partially enlarged sectional view illustrating a state in which battery 7 is inserted at a normal position and battery cover 12 is attached. Fig. 28 is a partially enlarged sectional view illustrating a state in which battery 7 is inserted at a reverse position and battery cover 12 is attached. Fig. 29 is a partially enlarged sectional view illustrating a state where battery 7 and battery cover 12 are removed. As illustrated in Fig. 27, when battery cover 12 is attached to body 11, energization part 181 of positive electrode terminal 18 is brought into contact with and electrically connected to positive electrode 72 of battery 7. As described above, in the present exemplary embodiment, battery 7 is housed and held in housing space 110 in a state where positive electrode 72 is positioned below.

However, housing space 110 has an elongated shape in the vertical direction, and thus allows battery 7 to be inserted into housing space 110 in a state where positive electrode 72 is positioned above as long as the longitudinal direction is substantially aligned with the vertical direction. That is, battery 7 can be inserted reversely in housing space 110. When battery 7 is inserted reversely in housing space 110 as described above, oral cleansing device 1 may malfunction.

Thus, when battery 7 is reversely inserted into housing space 110 in the present exemplary embodiment, there is no energization (i.e., electric power cannot be supplied to motor 3231). Specifically, cover body 16 is provided on its distal end (i.e., distal end surface 1621a of positive electrode terminal attachment part 1621) with rib 16211 protruding upward from energization part 181 of positive electrode terminal 18, as illustrated in Figs. 17, 27 and 28. Rib 16211 is formed at a position where battery 7 exists and no protrusion of positive electrode 72 exists when viewed along the vertical direction. This configuration enables the protrusion of positive electrode 72 to be brought into contact with energization part 181 as illustrated in Fig. 27 when battery 7 is inserted in a state where positive electrode 72 is positioned below. In contrast, when battery 7 is inserted in a state where positive electrode 72 is positioned above, rib 16211 comes into contact with negative electrode 71 of battery 7 to form a gap between energization part 181 and negative electrode 71 as illustrated in Fig. 28. That is, when battery 7 is inserted in a state where positive electrode 72 is positioned above, rib 16211 prevents contact between energization part 181 and negative electrode 71.

In the present exemplary embodiment, when battery cover 12 is attached to body 11, a gap between battery cover 12 and body 11 is sealed by a seal member, and thus a liquid is prevented from entering housing space 110 and splashing on battery 7.

Specifically, insertion part 162 of cover body 16 is provided in its outer periphery with attachment groove 163 over the entire periphery as illustrated in Fig. 22, and O-ring 19 as a seal member is detachably attached in attachment groove 163 as illustrated in Figs. 17, 18, and 21. This configuration enables presence of O-ring 19 (i.e., an example of seal member) to be visually checked when battery cover 12 is attached to body 11. As a result, when O-ring 19 (i.e., an example of seal member) is detached, the detachment of O-ring 19 (i.e., an example of seal member) can be checked more reliably, as compared with when an O-ring (i.e., an example of seal member) is attached on body 11. Thus, this configuration enables battery cover 12 to be more reliably prevented from being attached to body 11 in a state where a gap between battery cover 12 and body 11 is not sealed.

As illustrated in Fig. 16, opening 110a in body 11 is continuously provided around its entire circumference with inner wall 13 extending upward in the vertical direction, and when battery cover 12 is attached to body 11, entire outer periphery 191 (see Fig. 21) of O-ring 19 is brought into close contact with inner wall 13. This configuration allows a space between battery cover 12 (strictly, insertion part 162) and body 11 (strictly, inner wall 13) to be sealed by O-ring 19 as a seal member. At this time, attachment groove 163 is formed below positive electrode terminal 18 (i.e., close to a base of insertion part 162, or close to flat plate part 161) attached to positive electrode terminal attachment part 1621, so that the whole of positive electrode terminal 18 is also housed inside a part sealed by O-ring 19.

As described above, in the present exemplary embodiment, O-ring 19 (i.e., an example of seal member) seals the part closer to opening 110a than battery 7 and the terminal (i.e., negative electrode terminal 17 and positive electrode terminal 18) when battery cover 12 is attached to body 11. That is, providing O-ring 19 (i.e., an example of seal member) that seals a gap between battery cover 12 and body 11 causes housing space 110 in which battery 7 of oral cleansing device 1 is housed to be a waterproof structure. Thus, oral cleansing device 1 driven by battery 7 can be used in a state where a liquid is prevented from entering housing space 110.

Alternatively, body 11 (strictly inner wall 13) may be provided with a groove so that an O-ring is detachably attached to the groove to seal between battery cover 12 (strictly insertion part 162) and body 11 (strictly inner wall 13).

As illustrated in Figs. 10 to 15, battery cover 12 according to the present exemplary embodiment is configured to be able to switch between an attachment state and a non-attachment state by rotating cover body 16. That is, battery cover 12 includes cover body 16 that is rotatably attached to body 11 so as to be switchable between the attachment state and the non-attachment state. Battery cover 12 is opened or closed by rotating the whole of battery cover 12 (i.e., the whole of cover body 16 and O-ring 19). Opening 110a is formed in a circular shape and insertion part 162 inserted into opening 110a is formed in a substantially cylindrical columnar shape in the present exemplary embodiment, so that cover body 16 can be rotated at the time of switching between the attachment state and the non-attachment state.

The attachment state of battery cover 12 is a state in which a gap between battery cover 12 and body 11 is sealed with O-ring 19 (i.e., an example of seal member) while opening 110a of housing space 110 is closed. The non-attachment state of battery cover 12 is a state in which sealing of a gap between battery cover 12 and body 11 by O-ring 19 (i.e., an example of seal member) is released to enable battery cover 12 to be removed from body 11.

Additionally, when battery cover 12 is removed from body 11, such as when battery 7 is replaced, in the present exemplary embodiment, battery cover 12 can be opened and closed without using a member such as a coin. That is, battery cover 12 can be opened and closed by a hand of a user or the like, so that battery 7 can be replaced more easily.

Specifically, cover body 16 includes operation rib 1612 on which a finger can be hooked to switch between the attachment state and the non-attachment state of battery cover 12. As illustrated in Fig. 18, in the present exemplary embodiment, operation rib 1612 is formed protruding downward and toward outer surface 161a (i.e., a lower surface of flat plate part 161) of flat plate part 161. That is, operation rib 1612 is provided protruding along the longitudinal direction of battery 7. This configuration enables operation rib 1612 to have an appropriate height (i.e., protrusion height L1, see Fig. 5) so that operability when battery cover 12 is opened or closed can be further improved.

As described above, oral cleansing device 1 described in the present exemplary embodiment is configured to rotate cover body 16 to switch between the attachment state and the non-attachment state of battery cover 12. The attachment state and the non-attachment state of battery cover 12 can be switched by hooking a finger on operation rib 1612 and operating operation rib 1612 to rotate cover body 16. That is, battery cover 12 can be manually opened and closed.

This configuration does not require a member for detaching battery cover 12 from body 11, such as a coin, to be used when battery cover 12 is detached from body 11 to replace battery 7.

For example, when battery cover 12 is configured to be removed from body 11 by using a coin or the like, a member such as the coin is required to be prepared in advance when battery cover 12 is removed from body 11, thereby causing a user to feel troublesome. In contrast, when battery cover 12 is configured to be removed from body 11 by hooking a finger on operation rib 1612 as in the present exemplary embodiment, battery cover 12 can be removed from body 11 even when there is no member such as a coin at hand. Thus, the user does not feel troublesome to prepare a member such as a coin when battery 7 is replaced. Thus, battery cover 12 can be opened and closed more easily to enable battery 7 to be replaced more easily.

As illustrated in Fig. 5, operation rib 1612 is positioned close to the center of tube housing space 2b and tube 5 is positioned outside operation rib 1612 in tube housing space 2b in the housed state of device body 3 in the present exemplary embodiment. This configuration enables tube 5 to be wound outside operation rib 1612 (i.e., on an outer peripheral side) when tube 5 is housed in tube housing space 2b. That is, tube 5 can be wound with a relatively large curvature radius, so that tube 5 is prevented from being crushed or broken. As described above, operation rib 1612 exists inside tube 5 housed in tube housing space 2b in the present exemplary embodiment.

Operation rib 1612 has protrusion height L1 smaller than diameter D1 of tube 5. This configuration enables operation rib 1612 to be more reliably housed in tube housing space 2b when device body 3 is in the housed state. Tube 5 is also prevented from being crushed or broken by operation rib 1612.

Operation rib 1612 preferably has protrusion height L1 within a range which is equal to or greater than 3.5 mm and equal to or less than 4.5 mm. When protrusion height L1 of operation rib 1612 is set within the range above, interference with a mating part (such as tube 5 existing together in tube housing space 2b) can be prevented while deterioration of operability of operation rib 1612 is suppressed.

As illustrated in Fig. 19, in the present exemplary embodiment, operation rib 1612 is provided at a position eccentric from rotation center C1 of cover body 16. Specifically, when device body 3 is viewed from below, operation rib 1612 exists only in one of regions divided by a straight line passing through rotation center C1 of cover body 16. At this time, operation rib 1612 is positioned outside outer periphery 191 (see Fig. 21) of O-ring 19 (i.e., an example of seal member).

This configuration allows operation rib 1612 to exist at a position away from opening 110a into which battery 7 is inserted, thereby reducing operation force (e.g., torque) required for opening or closing battery cover 12. That is, cover body 16 can be rotated with a relatively weak force, so that operability when battery cover 12 is opened or closed can be further improved.

In the present exemplary embodiment, cover body 16 further includes an engagement part that is releasably engaged with an engaged part formed in body 11 and is capable of preventing cover body 16 from coming off from body 11 in the attachment state. This configuration enables battery cover 12 to maintain a closed state of opening 110a of housing space 110, and thus enables battery cover 12 to be more reliably prevented from coming off from body 11.

Specifically, engagement claw 164 protruding outward in the radial direction is provided on an outer periphery of insertion part 162 of cover body 16 as illustrated in Fig. 17, and engagement groove 131 with which engagement claw 164 engages is provided on an inner surface of inner wall 13 of body 11 as illustrated in Fig. 16. A plurality of engagement grooves 131 may be provided.

Engagement claws 164 paired are formed on respective sides across rotation center C1 of cover body 16, and each engagement groove 131 is formed in a part of inner wall 13, the part corresponding to one of engagement claws 164, in the present exemplary embodiment.

As just described, providing engagement claws 164 on battery cover 12 and engagement grooves 131 in body 11 enables further reduction in opening diameter of housing space 110 (i.e., a diameter of opening 110a). For example, when an engagement claw is provided on body 11, housing space 110 needs to be increased in its opening diameter by size of engagement claw. However, when engagement claw 164 is provided on battery cover 12, housing space 110 does not need to be increased in opening diameter. Thus, housing space 110 can be further reduced in opening diameter.

As illustrated in Figs. 19 and 20, in the present exemplary embodiment, operation rib 1612 is positioned outside engagement claw 164 with respect to rotation center C1 of battery cover 12 that is rotated to switch between the attachment state and the non-attachment state. In other words, operation rib 1612 includes an operation part (i.e., a part where a finger is hooked during operation) existing outside a virtual circle including an outer periphery of engagement claw 164 (i.e., a region where rotation center C1 of battery cover 12 does not exist) as viewed along rotation axis C of cover body 16. This configuration allows operation rib 1612 to be operated outside the virtual circle including the outer periphery of engagement claw 164, so that operability when battery cover 12 is opened or closed can be further improved.

Operation rib 1612, attachment groove 163, and engagement claw 164 are integrally molded with cover body 16 in the present exemplary embodiment, and thus cover body 16 is composed of one component. This configuration enables reduction in number of components, and thus enables a simple configuration and cost reduction. Alternatively, battery cover 12 can be configured to be entirely rotated when battery cover 12 is opened or closed while at least one of operation rib 1612, attachment groove 163, and engagement claw 164 is formed as a separate member.

As illustrated in Fig. 29, engagement groove 131 further includes opening 1311a that is open toward battery cover 12, and forward engagement groove 1311 that allows engagement claw 164 to move backward in housing space 110. Similarly to the case in Fig. 16, device body 3 is inverted in Fig. 29. Engagement groove 131 includes backward engagement groove 1312 that is continuously connected to forward engagement groove 1311 on a back side in housing space 110, and that allows engagement claw 164 to move in a rotation direction of battery cover 12 in housing space 110. In the present exemplary embodiment, opening 110a of housing space 110 has a substantially cylindrical columnar shape, and a circumferential direction of opening 110a in housing space 110 is the rotation direction of battery cover 12. Engagement groove 131 including forward engagement groove 1311 and backward engagement groove 1312 causes engagement groove 131 to have a shape in which engagement groove 131 is bent backward (i.e., upward) in the circumferential direction. This configuration enables battery cover 12 to be opened and closed by two operations of pushing battery cover 12 backward and rotating battery cover 12 in the circumferential direction. When battery cover 12 is attached to body 11, engagement claw 164 is to be introduced into backward engagement grooves 1312.

As described above, battery cover 12 can be prevented from coming off from body 11 while opening and closing operation of battery cover 12 is simplified in the present exemplary embodiment.

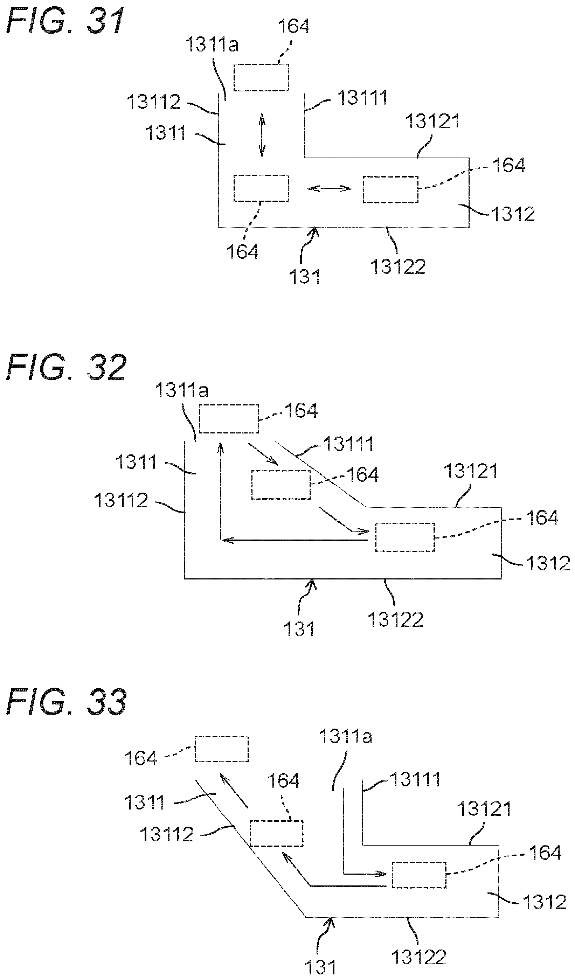

Fig. 30 is a diagram schematically illustrating an example of engagement groove 131 formed in battery housing 10 of oral cleansing device 1 according to the present exemplary embodiment. Fig. 31 is a diagram schematically illustrating a first modification of engagement groove 131 formed in battery housing 10 of oral cleansing device 1 according to the present exemplary embodiment. Fig. 32 is a diagram schematically illustrating a second modification of engagement groove 131 formed in battery housing 10 of oral cleansing device 1 according to the present exemplary embodiment. Fig. 33 is a diagram schematically illustrating a third modification of engagement groove 131 formed in battery housing 10 of oral cleansing device 1 according to the present exemplary embodiment. Similarly to the case in Fig. 29, device body 3 is inverted in Fig. 30 to 33. As illustrated in Figs. 30 to 33, backward engagement groove 1312 includes first backward wall part 13121 positioned facing (i.e., below) battery cover 12 and second backward wall part 13122 positioned backward (i.e., above) in housing space 110, thereby defining both sides in the longitudinal direction of battery 7 (i.e., both sides of battery 7 in the vertical direction). Thus, when battery cover 12 attached to body 11 is about to be pulled out, engagement claw 164 introduced into backward engagement groove 1312 is caught by first backward wall part 13121 to cause battery cover 12 to maintain a closed state of opening 110a of housing space 110. That is, when engagement claw 164 is introduced into backward engagement groove 1312, battery cover 12 is locked in a state of closing opening 110a of housing space 110.

forward engagement groove 1311 includes first forward wall part 13111 connected to first backward wall part 13121 and second forward wall part 13112 connected to second backward wall part 13122, thereby defining both sides in the circumferential direction (i.e., the rotation direction of battery cover 12) in housing space 110. Thus, when battery cover 12 is pushed backward, engagement claw 164 is introduced into forward engagement grooves 1311 from opening 1311a, and is moved backward (i.e., upward) along the longitudinal direction of battery 7. Then, when battery cover 12 is rotated toward one side in the rotation direction (i.e., in a closing direction) in a state where engagement claw 164 has been pushed backward (i.e., upward) in forward engagement groove 1311, engagement claw 164 is introduced into backward engagement groove 1312, and then battery cover 12 is locked in a state of closing opening 110a of housing space 110.

In contrast, when battery cover 12 having been locked is turned to the other side in the rotation direction (i.e., in an opening direction), engagement claw 164 is introduced from backward engagement groove 1312 into forward engagement groove 1311, and then battery cover 12 can be removed from body 11. Then, when battery cover 12 is pulled forward in this state, engagement claw 164 is moved forward (i.e., downward) in forward engagement groove 1311 in the longitudinal direction of battery 7, and is discharged from opening 1311a to the outside of engagement groove 131. As a result, battery cover 12 is removed from body 11.

As illustrated in Figs. 29 and 30, first forward wall part 13111 is inclined in a direction away from first backward wall part 13121 toward opening 1311a, and second forward wall part 13112 is inclined in a direction away from second backward wall part 13122 toward opening 1311a.

Other examples of engagement groove 131 having a shape in which engagement groove 131 is bent backward (i.e., upward) in the circumferential direction (i.e., the rotation direction of battery cover 12) include an example illustrated in Fig. 31 in which first forward wall part 13111 and second forward wall part 13112 extend in the longitudinal direction (i.e., the vertical direction) of battery 7.

The other examples also include another example illustrated in Fig. 32, in which although first forward wall part 13111 is inclined in a direction away from first backward wall part 13121 toward opening 1311a, second forward wall part 13112 extends in the longitudinal direction (i.e., the vertical direction) of battery 7.

The other examples also include yet another example illustrated in Fig. 33, in which although first forward wall part 13111 extends in the longitudinal direction (i.e., the vertical direction) of battery 7, second forward wall part 13112 is inclined in a direction away from second backward wall part 13122 toward opening 1311a.

The example illustrated in Fig. 31 is configured such that battery cover 12 is pushed backward (i.e., upward) to move engagement claws 164 backward (i.e., upward) of forward engagement groove 1311, and then battery cover 12 in this state is rotated toward one side in the rotation direction (i.e., in the closing direction) to be brought into a locked state. When the locked state is released, battery cover 12 is rotated to the other side in the rotation direction (i.e., in the opening direction) to cause engagement claw 164 to face opening 1311a of forward engagement groove 1311, and then battery cover 12 in this state is pulled forward (i.e., downward).

As described above, negative electrode terminal 17 includes spring part 171 in the present exemplary embodiment, so that when a hand is released from battery cover 12 having been pushed backward (i.e., upward), battery cover 12 is pushed forward (i.e., downward) by a pushing force of spring part 171, and then engagement claw 164 is moved forward (i.e., downward). At this time, when engagement claw 164 is moved so as to face first forward wall part 13111 in the circumferential direction (i.e., the rotation direction of battery cover 12), even if battery cover 12 has been rotated to one side in the rotation direction (i.e., in the closing direction), the battery cover 12 cannot be brought into the locked state. As described above, when first forward wall part 13111 and second forward wall part 13112 extend in the vertical direction, battery cover 12 is required to be rotated while being pushed depending on the amount of movement of engagement claw 164 caused by a pushing force of spring part 171, and thus may be deteriorated in operability.

In contrast, when first forward wall part 13111 is inclined in a direction away from first backward wall part 13121 toward opening 1311a as illustrated in Figs. 30 and 32, battery cover 12 is not required to be rotated while being pushed. That is, even when engagement claw 164 is moved so as to face first forward wall part 13111 in the circumferential direction (i.e., the rotation direction of battery cover 12) by a pushing force of spring part 171, engagement claw 164 can be introduced into backward engagement groove 1312 by simply rotating battery cover 12. Specifically, simply rotating battery cover 12 moves engagement claw 164 along which first forward wall part 13111 has been inclined, so that engagement claw 164 moved along first forward wall part 13111 is introduced into backward engagement groove 1312.

As illustrated in Figs. 31 and 32, when second forward wall part 13112 extends in the longitudinal direction (i.e., the vertical direction) of battery 7, battery cover 12 is required to be rotated to the other side in the rotation direction (i.e., in the opening direction) to cause engagement claw 164 to face opening 1311a of forward engagement groove 1311, and then battery cover 12 in this state is pulled forward (i.e., downward) to release a locked state.

In contrast, when second forward wall part 13112 is inclined in a direction away from second backward wall part 13122 toward opening 1311a as illustrated in Figs. 30 and 33, battery cover 12 is not required to be pulled forward (i.e., downward) to release the locked state. That is, when battery cover 12 is simply rotated toward the other side in the rotation direction (i.e., the opening direction), engagement claw 164 can be moved to opening 1311a along inclined second forward wall part 13112.

Thus, when first forward wall part 13111 and second forward wall part 13112 are inclined as illustrated in Fig. 30, battery cover 12 can be improved in operability of both opening operation and closing operation. For this reason, first forward wall part 13111 and second forward wall part 13112 are inclined in the present exemplary embodiment.

Engagement groove 131 may be formed in any of the shapes illustrated in Figs. 31 to 33.

Even engagement groove 131 formed as described above enables battery cover 12 to be prevented from coming off from body 11 while opening and closing operation of battery cover 12 is simplified.

Engagement claw 164 (i.e., an example of engagement part) in the present exemplary embodiment is formed below attachment groove 163 (i.e., on a side close to a base of insertion part 162, or close to flat plate part 161) in which O-ring 19 (i.e., an example of seal member) is attached. Thus, when battery cover 12 is attached to body 11, attachment groove 163 is positioned behind engagement claw 164 (i.e., an example of engagement part) in housing space 110. This configuration allows a gap between battery cover 12 and body 11 to be sealed backward (i.e., upward) of engagement claw 164 (i.e., an example of engagement part) engaged with engagement grooves 131 (i.e., an example of engaged part), so that a liquid can be more reliably prevented from entering a part where battery 7 is housed in housing space 110.

However, when engagement groove 131 (i.e., an example of engaged part) and engagement claw 164 (i.e., an example of engagement part) are engaged with each other in front of (i.e., below) O-ring 19 (i.e., a seal member), a liquid may enter engagement groove 131 (i.e., an example of engaged part) during use of oral cleansing device 1. Then, when the liquid enters engagement groove 131 (i.e., an example of engaged part), the liquid in engagement groove 131 (i.e., an example of engaged part) may flow toward battery 7 when battery cover 12 is removed from body 11.

Thus, in the present exemplary embodiment, body 11 is provided on its peripheral part 14 around opening 110a of housing space 110 (i.e., a peripheral part around opening 110a on the lower surface of device body 3) with sealing rib 141 over the entire circumference of peripheral part 14, sealing rib 141 coming into contact with battery cover 12 in the attachment state, as illustrated in Figs. 16 and 27. This configuration allows sealing rib 141 to seal a gap between battery cover 12 and body 11 in front of (i.e., below or outside) engagement claw 164 (i.e., an example of engagement part) and engagement groove 131 (i.e., an example of engaged part) when battery cover 12 is attached to body 11. This configuration enables preventing a liquid from entering an engaged part in the shape of a groove (e.g., engagement groove 131) during use of oral cleansing device 1, for example, and thus enables preventing the liquid accumulated in the engaged part in the shape of a groove (e.g., engagement groove 131) from flowing backward in housing space 110 when battery cover 12 is removed from body 11. As described above, the liquid can be prevented from entering housing space 110 more reliably in the present exemplary embodiment due to the double sealing structure.

In the present exemplary embodiment, cover body 16 includes at least a part that protrudes from device body 3 as viewed along rotation axis C of cover body 16 while battery cover 12 is rotated to switch the attachment state to the non-attachment state. When the whole of battery cover 12 exists inside device body 3 (i.e., does not protrude from device body 3) as viewed along rotation axis C of cover body 16 while cover body 16 is rotated between the attachment state and the non-attachment state, a gap between battery cover 12 and body 11 is sealed by O-ring 19 (i.e., an example of seal member). This configuration causes the gap between battery cover 12 and body 11 to be sealed even when battery cover 12 is not securely attached to body 11 (i.e., in a half-open state), and thus enables the liquid to be more reliably prevented from entering housing space 110.

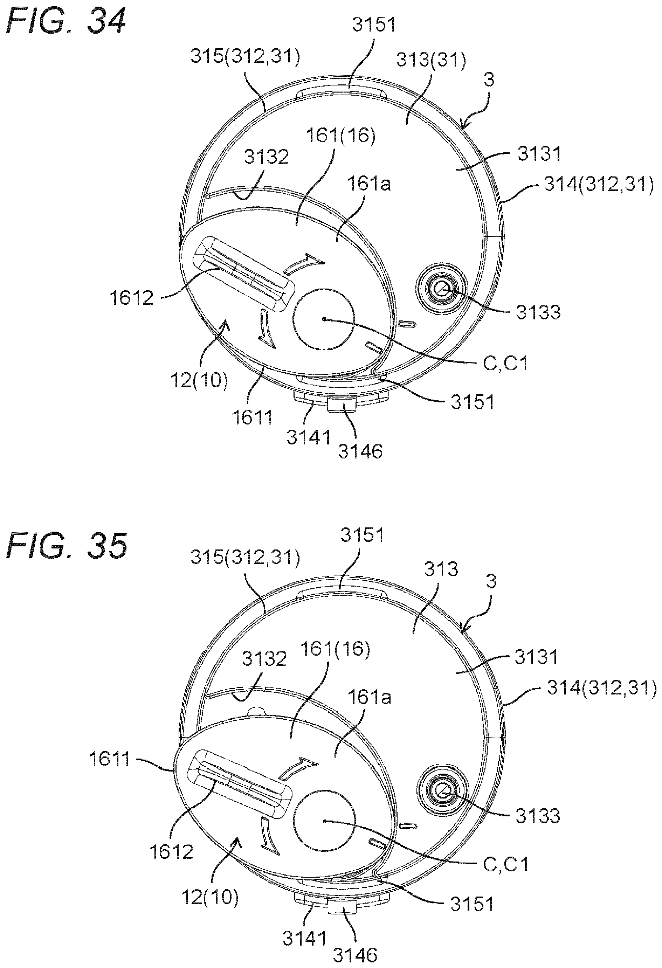

Figs. 34 and 35 are each a diagram illustrating device body 3 of oral cleansing device 1 according to the present exemplary embodiment. Fig. 34 is a diagram illustrating a back surface of device body 3 in a state where battery cover 12 is in a half-open state without protruding from large-diameter part 314. Fig. 35 is a diagram illustrating a back surface of device body 3 in a state where battery cover 12 is in a half-open state while protruding from large-diameter part 314. As illustrated in Figs. 11 and 34, the gap between battery cover 12 and body 11 is sealed with O-ring 19 (i.e., an example of seal member) in the present exemplary embodiment when the whole of battery cover 12 exists inside a contour of large-diameter part 314 when device body 3 is viewed from below. This kind of configuration can be formed by causing engagement claw 164 to be positioned in backward engagement groove 1312 of engagement groove 131 when the whole of battery cover 12 exists inside the contour of large-diameter part 314 in a state where device body 3 is viewed from below, for example.

Additionally, in the present exemplary embodiment, large-diameter part 314 is formed with an outer diameter that is slightly smaller than an inner diameter of tubular body 21. Thus, when at least a part of battery cover 12 protrudes from device body 3 as viewed along rotation axis C of cover body 16, as illustrated in Figs. 14 and 35, tank 2 cannot be attached to device body 3. This configuration prevents device body 3 from being inserted into tank 2 when battery cover 12 is forgotten to be closed (i.e., when housing space 110 is in an unsealed state). That is, when tank 2 can be attached to device body 3, housing space 110 is always sealed.

This configuration enables preventing oral cleansing device 1 from being used when a liquid is permitted to enter housing space 110, and thus enables preventing the liquid from entering housing space 110 during use of oral cleansing device 1.

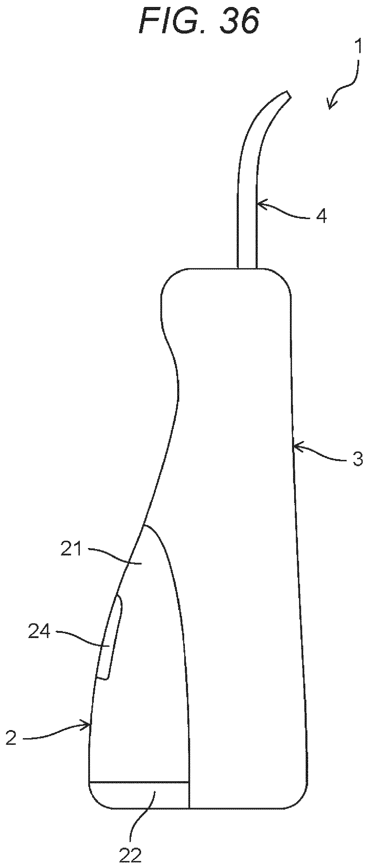

Although oral cleansing device 1 with a telescopic tank in which device body 3 is slidably supported by tank 2 has been described in the above-mentioned exemplary embodiment by way of example, the present disclosure is not limited thereto. Fig. 36 is a side view illustrating oral cleansing device 1 according to a modification. For example, the present disclosure is also applicable to oral cleansing device 1 with a separate tank as illustrated in Fig. 36. Oral cleansing device 1 with a separate tank illustrated in Fig. 36 includes tank 2 that is detachably attached to device body 3. Then, nozzle 4 is detachably attached to device body 3.

When oral cleansing device 1 with a separate tank is driven by a battery, a battery housing in which the battery can be housed can be reduced in size by attaching a positive electrode terminal to a battery cover. The battery cover also can be configured such that an attachment state and a non-attachment state can be switched by rotating a cover body, and the cover body can be provided with an operation rib capable of switching between the attachment state and the non-attachment state of the battery cover by being hooked by a finger. At this time, the operation rib can be formed protruding along a longitudinal direction of the battery, or can be formed protruding along a radial direction of the battery.

When the operation rib is formed protruding along the longitudinal direction of the battery while the battery cover is positioned downward, the battery housing is preferably formed by forming a recess in a bottom wall of device body 3 and disposing the operation rib in the recess. This configuration prevents the operation rib from protruding from a lower end of device body 3, and thus enables the operation rib to be hidden in the recess in a normal placement state.

### [Operation and effect]

Hereinafter, a characteristic configuration of the oral cleansing device described in the exemplary embodiment above and the modification of the exemplary embodiment, and an effect obtained by the characteristic configuration will be described.

Oral cleansing device 1 described in the above-mentioned exemplary embodiment and the modification of the exemplary embodiment includes battery housing 10 capable of housing battery 7 and is driven by battery 7.

Battery housing 10 includes body 11 having housing space 110 in which battery 7 is housed, and battery cover 12 that closes opening 110a of housing space 110.

Here, battery cover 12 includes only positive electrode terminal 18 out of negative electrode terminal 17 electrically connected to negative electrode 71 of battery 7 and positive electrode terminal 18 electrically connected to positive electrode 72 of battery 7.

Body 11 includes negative electrode terminal 17 electrically connected to positive electrode terminal 18 of battery cover 12 through battery 7.

As described above, oral cleansing device 1 described in the above-mentioned exemplary embodiment and the modification of the exemplary embodiment includes battery cover 12 that closes opening 110a of housing space 110, and that includes only positive electrode terminal 18 out of negative electrode terminal 17 and positive electrode terminal 18.

This configuration enables suppressing an increase in size of battery cover 12 in the radial direction as compared with when negative electrode terminal 17 is provided in battery cover 12. As a result, body 11 to which battery cover 12 is attached can be reduced in size (i.e., size in the radial direction), so that battery housing 10 can be downsized.

Negative electrode terminal 17 may include spring part 171, and battery cover 12 may be positioned at a lower part of body 11 in a normal state.

As described above, negative electrode terminal 17 having a spring structure can secure necessary and sufficient contact pressure. In other words, at least one of the contact pressure between battery 7 and negative electrode terminal 17 and the contact pressure between battery 7 and positive electrode terminal 18 can be secured sufficiently.

In oral cleansing device 1 described in the above-mentioned exemplary embodiment and the modification of the exemplary embodiment, negative electrode terminal 17 having a spring structure is not provided in battery cover 12, so that spring part 171 can be prevented from coming off when battery is replaced.

Spring part 171 of negative electrode terminal 17 exists above battery 7 in the normal placement state of oral cleansing device 1, so that a load of battery 7 can be prevented from being applied to spring part 171 as much as possible. As a result, spring part 171 can be prevent from fatiguing.

Spring part 171 may include leaf spring 172 and coil spring 173.

This configuration enables spring part 171 to secure contact pressure while suppressing a voltage drop with a simpler configuration, and thus enables not only more reliably securing energization but also preventing decrease in output of a driving source such as motor 3231.

When spring part 171 includes leaf spring 172 and coil spring 173, energization can be secured even when battery 7 minimum in size of a standard is used, and spring part 171 can be prevented from fatiguing even when battery 7 maximum in size of the standard is used.

When spring part 171 includes leaf spring 172 and coil spring 173, there is also an advantage of enabling spring part 171 to be more compact in size, spring part 171 being capable of securing contact pressure while suppressing a voltage drop.

Additionally, body 11 may include boss 152 as a contraction restricting part that restricts contraction of spring part 171 in a state where coil spring 173 has a length longer than the solid length thereof.

This configuration enables suppressing contraction of spring part 171 before coil spring 173 contracts to a solid length even when a large load in a contracting direction is applied to spring part 171, such as when battery 7 is inserted reversely or when a device such as oral cleansing device 1 or device body 3 is dropped. Thus, plastic deformation of leaf spring 172 and coil spring 173 due to the application of the large load in the contracting direction can be suppressed.

Leaf spring 172 may include positional displacement prevention part 17212 that prevents positional displacement of coil spring 173.

This configuration enables separation between leaf spring 172 and coil spring 173 to be more reliably prevented.

Leaf spring 172 may include protrusion 17211 protruding toward battery 7.

This configuration enables further stabilizing contact between negative electrode terminal 17 and battery 7, and thus enables more reliably preventing occurrence of conduction failure during use of oral cleansing device 1.

Battery cover 12 may include cover body 16 to which positive electrode terminal 18 is attached. Cover body 16 may be provided with rib 16211 that prevents negative electrode 71 of battery 7 from coming into contact with positive electrode terminal 18 when battery 7 is housed in battery housing 10 in a state where negative electrode 71 faces positive electrode terminal 18.

This configuration prevents energization of battery 7 when battery 7 is inserted reversely, and thus enables preventing malfunction of oral cleansing device 1 more reliably.

### [Others]

Although the contents of the nozzle for an oral cleansing device and the oral cleansing device according to the present disclosure have been described above, the above-described exemplary embodiment and the modification thereof are intended to illustrate the technique in the present disclosure. Thus, various changes, replacements, additions, omissions, and the like can be made within the scope of claims or equivalents thereof.

For example, a nozzle for an oral cleansing device and an oral cleansing device can be provided in which the configurations described in the above-mentioned exemplary embodiment and the modification thereof are appropriately combined.

Although oral cleansing device 1 with a telescopic tank has been described in the above-mentioned exemplary embodiment and the modification thereof by way of example, in which device body 3 is brought into the pulled-out state by rotating device body 3 relatively to tank 2, the present disclosure is not limited thereto. For example, an oral cleansing device with a telescopic tank can be provided in which device body 3 is pulled in a sliding direction to bring device body 3 into a pulled-out state.

Various types of an oral cleansing device may be available as long as being a battery replaceable device capable of replacing battery 7 as a driving source. That is, an oral cleansing device assuming that a dry battery, a rechargeable battery, or the like is replaced with a new battery when the battery reaches its end of life may be available. For example, not only a device using a dry battery, but also a device using a rechargeable battery is available. The device using a rechargeable battery may be configured to charge the rechargeable battery after being detached from the device, or to charge the rechargeable battery housed in the device.

Additionally, specifications (shape, size, layout, and the like) of the device body, the tank, and other details can be changed as appropriate.

### INDUSTRIAL APPLICABILITY

As described above, the oral cleansing device according to the present disclosure enables reduction in size of the battery housing, and thus can be used for various kinds of an oral cleansing device, including home and business uses.

### REFERENCE MARKS IN THE DRAWINGS

- 1: oral cleansing device
- 10: battery housing
- 11: body
- 110: housing space
- 110a: opening
- 111: battery base
- 12: battery cover
- 13: inner wall
- 131: engagement groove
- 1311: forward engagement groove
- 1311a: opening
- 13111: first forward wall part
- 13112: second forward wall part
- 1312: backward engagement groove
- 13121: first backward wall part
- 13122: second backward wall part
- 14: peripheral part
- 141: sealing rib
- 15: negative electrode terminal holder
- 151: attachment part
- 152: boss
- 16: cover body
- 161: flat plate part
- 161a: outer surface
- 161b: inner surface
- 1611: outer peripheral surface
- 1612: operation rib
- 162: insertion part
- 1621: positive electrode terminal attachment part
- 1621a: distal end surface
- 16211: rib
- 163: attachment groove
- 164: engagement claw
- 17: negative electrode terminal
- 171: spring part
- 172: leaf spring
- 1721: battery contact part
- 17211: protrusion
- 17212: positional displacement prevention part
- 173: coil spring
- 18: positive electrode terminal
- 181: energization part
- 19: O-ring
- 191: outer periphery
- 2: tank
- 2a: reservoir
- 2b: tube housing space
- 21: tubular body
- 211: pull-out recess
- 212: marked recess
- 213: drying hole
- 214: liquid supply hole
- 2121: inclined surface
- 22: bottom wall
- 221: bottom wall body
- 222: peripheral wall
- 2221: packing
- 2222: housing recess
- 24: liquid supply lid
- 241: hinge
- 242: packing
- 3: device body
- 31: housing
- 311: top wall
- 3111: nozzle attachment part
- 312: peripheral wall
- 313: bottom wall
- 3131: bottom surface
- 3132: housing recess
- 3133: tube attachment part
- 314: large-diameter part
- 3141: button
- 3142: power supply switch
- 3143: nozzle housing
- 3144: pull-out protrusion
- 3145: packing
- 3146: marked protrusion
- 315: small-diameter part
- 3151: housing protrusion
- 32: flow path
- 321: suction path
- 322: discharge path
- 323: pump
- 3231: motor
- 3232: cam
- 3233: piston
- 3234: pump chamber
- 4: nozzle
- 5: tube
- 6: coil spring
- 7: battery
- 71: negative electrode
- 72: positive electrode
- C: rotation axis
- C1: rotation center
- D1: diameter of tube 5
- L1: protrusion height

## Claims

1. An oral cleansing device (1) that is driven by a battery (7), the oral cleansing device (1) comprising:
a battery housing (10) configured to house the battery (7), the battery housing (10) comprising:
a body (11) comprising a housing space (110) in which the battery (7) is housed; and
a battery cover (12) positioned at a lower part of the body (11)that closes an opening of the housing space (110),
wherein
the battery cover (12) comprises only a positive electrode terminal (18) out of a negative electrode terminal (17) electrically connected to a negative electrode (71) of the battery (7) and the positive electrode terminal (18) electrically connected to a positive electrode (72) of the battery (7), and
the body (11) includes the negative electrode terminal (17) electrically connected to the positive electrode terminal (18) of the battery cover (12) via the battery (7),
wherein the negative electrode terminal (17) comprises a spring part (171) having a leaf spring (172) formed in a spiral shape and a coil spring (173),
wherein the leaf spring (172) has one end connected to the negative electrode terminal (17) and the other end provided with a battery contact part (1721), and
wherein the coil spring (173) is disposed inside leaf spring (172) to support the battery contact part (1721).

2. The oral cleansing device (1) according to Claim 1, wherein
the body (11) comprises a contraction restricting part (152) that is configured to restrict contraction of the spring part (171) in a state where the coil spring (173) has a length longer than the solid length thereof.

3. The oral cleansing device (1) according to Claim 1 or 2, wherein
the battery contact part (1721) is, on a side where the coil spring (173) is positioned, provided with a groove (17212) that is engaged with the other end of coil spring (173) so as to prevent positional displacement of the coil spring (173) with respect to the leaf spring (172).

4. The oral cleansing device (1) according to any one of Claims 1 to 3, wherein
the leaf spring (172) comprises a protrusion (17211) protruding toward the battery (7).

5. The oral cleansing device (1) according to any one of Claims 1 to 4, wherein
the battery cover (12) comprises a cover body (16) to which the positive electrode terminal (18) is attached, and
the cover body (16) is provided with a rib (16211) that protrudes upward from an energization part (181) of the positive electrode terminal (18), wherein the rib (16211) is formed at a position where, when the battery (7) is inserted, the battery (7) exists but no protrusion of the positive electrode (72) of the battery (7) exists, so that when the battery (7) is inserted in a state where the negative electrode (71) faces the battery cover (12), the rib (16211) comes into contact with the negative electrode (71) of the battery (7) to form a gap between the energization part (181) and the negative electrode (71) and prevents the negative electrode (71) from coming into contact with the positive electrode terminal (18) when the battery (7) is housed in the battery housing (10) in a state where the negative electrode (71) faces the positive electrode terminal (18).

## Patentansprüche

1. Oralreinigungsvorrichtung (1), die durch eine Batterie (7) angetrieben wird, wobei die Oralreinigungsvorrichtung (1) umfasst:
ein Batteriegehäuse (10), das zur Aufnahme der Batterie (7) ausgebildet ist, wobei das Batteriegehäuse (10) umfasst:
einen Körper (11), umfassend einen Aufnahmeraum (110), in dem die Batterie (7) aufgenommen ist; und
eine Batterieabdeckung (12), die an einem unteren Teil des Körpers (11) angeordnet ist und eine Öffnung des Aufnahmeraums (110) verschließt,
wobei
die Batterieabdeckung (12) nur einen Pluselektrodenanschluss (18) von einem Minuselektrodenanschluss (17), der elektrisch mit einer Minuselektrode (71) der Batterie (7) verbunden ist, und einem Pluselektrodenanschluss (18), der elektrisch mit einer Pluselektrode (72) der Batterie (7) verbunden ist, umfasst, und
der Körper (11) den Minuselektrodenanschluss (17) umfasst, der elektrisch mit dem Pluselektrodenanschluss (18) der Batterieabdeckung (12) über die Batterie (7) verbunden ist,
wobei der Minuselektrodenanschluss (17) einen Federteil (171) umfasst, der eine Blattfeder (172), gebildet in einer Spiralform, und eine Schraubenfeder (173) aufweist,
wobei ein Ende der Blattfeder (172) mit dem Minuselektrodenanschluss (17) verbunden ist und das andere Ende mit einem Batteriekontaktteil (1721) ausgestattet ist, und
wobei die Schraubenfeder (173) innerhalb der Blattfeder (172) angeordnet ist, um den Batteriekontaktteil (1721) abzustützen.

2. Oralreinigungsvorrichtung (1) nach Anspruch 1, wobei
der Körper (11) einen Kontraktionsbeschränkungsteil (152) umfasst, der zum Beschränken der Kontraktion des Federteils (171) in einem Zustand ausgebildet ist, in dem die Schraubenfeder (173) eine Länge länger als die Blocklänge von dieser aufweist.

3. Oralreinigungsvorrichtung (1) nach Anspruch 1 oder 2, wobei
der Batteriekontaktteil (1721) auf einer Seite, auf der die Schraubenfeder (173) angeordnet ist, mit einer Nut (17212) versehen ist, in die das andere Ende der Schraubenfeder (173) eingreift, um eine Positionsverschiebung der Schraubenfeder (173) in Bezug auf die Blattfeder (172) zu verhindern.

4. Oralreinigungsvorrichtung (1) nach einem der Ansprüche 1 bis 3, wobei
die Blattfeder (172) einen Vorsprung (17211) umfasst, der in Richtung der Batterie (7) vorsteht.

5. Oralreinigungsvorrichtung (1) nach einem der Ansprüche 1 bis 4, wobei
die Batterieabdeckung (12) einen Abdeckungskörper (16) umfasst, an dem der Pluselektrodenanschluss (18) befestigt ist, und
der Abdeckungskörper (16) mit einer Rippe (16211) versehen ist, die von einem Stromzuführungsteil (181) des Pluselektrodenanschlusses (18) nach oben vorsteht, wobei die Rippe (16211) an einer Position gebildet ist, an der sich bei eingelegter Batterie (7) die Batterie (7) befindet, jedoch kein Vorsprung der Pluselektrode (72) der Batterie (7) vorhanden ist, so dass, wenn die Batterie (7) in einem Zustand eingelegt wird, in dem die Minuselektrode (71) der Batterieabdeckung (12) zugewandt ist, die Rippe (16211) mit der Minuselektrode (71) der Batterie (7) in Kontakt kommt, um einen Spalt zwischen dem Stromzuführungsteil (181) und der Minuselektrode (71) zu bilden, und verhindert, dass die Minuselektrode (71) mit dem Pluselektrodenanschluss (18) in Kontakt kommt, wenn die Batterie (7) in dem Batteriegehäuse (10) in einem Zustand aufgenommen ist, in dem die Minuselektrode (71) dem Pluselektrodenanschluss (18) zugewandt ist.

## Revendications

1. Dispositif de nettoyage buccal (1) qui est entraîné par une batterie (7), le dispositif de nettoyage buccal (1) comprenant :
un logement de batterie (10) configuré pour loger la batterie (7), le logement de batterie (10) comprenant :
un corps (11) comprenant un espace de logement (110) dans lequel la batterie (7) est logée ; et
un couvercle de batterie (12) positionné au niveau d'une partie inférieure du corps (11) qui ferme une ouverture de l'espace de logement (110),
dans lequel
le couvercle de batterie (12) comprend uniquement une borne d'électrode positive (18) parmi une borne d'électrode négative (17) électriquement connectée à une électrode négative (71) de la batterie (7) et la borne d'électrode positive (18) électriquement connectée à une électrode positive (72) de la batterie (7), et
le corps (11) comporte la borne d'électrode négative (17) électriquement connectée à la borne d'électrode positive (18) du couvercle de batterie (12) via la batterie (7),
dans lequel la borne d'électrode négative (17) comprend une partie ressort (171) ayant un ressort à lame (172) formé en spirale et un ressort hélicoïdal (173),
dans lequel le ressort à lame (172) a une extrémité connectée à la borne d'électrode négative (17) et une autre extrémité munie d'une partie de contact de batterie (1721), et
dans lequel le ressort hélicoïdal (173) est disposé à l'intérieur du ressort à lame (172) afin de soutenir la partie de contact de batterie (1721).

2. Dispositif f de nettoyage buccal (1) selon la revendication 1, dans lequel
le corps (11) comprend une partie de restriction de contraction (152) qui est configurée pour restreindre une contraction de la partie ressort (171) dans un état où le ressort hélicoïdal (173) a une longueur supérieure à la longueur à spires jointives de celui-ci.

3. Dispositif de nettoyage buccal (1) selon la revendication 1 ou 2, dans lequel
la partie de contact de batterie (1721) est, sur un côté où le ressort hélicoïdal (173) est positionné, munie d'une rainure (17212) qui est en prise avec l'autre extrémité du ressort hélicoïdal (173) de manière à empêcher un déplacement positionnel du ressort hélicoïdal (173) par rapport au ressort à lame (172).

4. Dispositif de nettoyage buccal (1) selon l'une quelconque des revendications 1 à 3, dans lequel
le ressort à lame (172) comprend une saillie (17211) faisant saillie vers la batterie (7).

5. Dispositif de nettoyage buccal (1) selon l'une quelconque des revendications 1 à 4, dans lequel
le couvercle de batterie (12) comprend un corps de couvercle (16) auquel la borne d'électrode positive (18) est fixée, et
le corps de couvercle (16) est muni d'une nervure (16211) faisant saillie vers le haut à partir d'une partie de mise sous tension (181) de la borne d'électrode positive (18), dans lequel la nervure (16211) est formée à une position où, lorsque la batterie (7) est insérée, la batterie (7) est présente, mais aucune saillie de l'électrode positive (72) de la batterie (7) n'est présente, de sorte que, lorsque la batterie (7) est insérée dans un état où l'électrode négative (71) fait face au couvercle de batterie (12), la nervure (16211) vient en contact avec l'électrode négative (71) de la batterie (7) pour former un espace entre la partie de mise sous tension (181) et l'électrode négative (71) et empêche l'électrode négative (71) d'entrer en contact avec la borne d'électrode positive (18) lorsque la batterie (7) est logée dans le logement de batterie (10) dans un état où l'électrode négative (71) fait face à la borne d'électrode positive (18).
